# EUROPEAN PATENT APPLICATION

(11) **EP 0 899 345 A1**
(43) Date of publication of application: **03.03.1999**
(21) Application number: 97912518.4
(22) Date of filing: 19.11.1997
(51) Int. Cl.: C21B 13/10, C21B 11/00, C21B 11/02, C22B 1/14

(54) **REDUCED IRON MANUFACTURING METHOD AND APPARATUS**

(30) Priority: 20.11.1996 JP 324704/96; 10.12.1996 JP 329950/96
(71) Applicant: SUMITOMO METAL INDUSTRIES, LTD., Osaka-Shi, Osaka 541 (JP)
(72) Inventor: KAMEI, Yasuo, Chiba 275 (JP); KAWAGUCHI, Takazo, Chiba 289-03 (JP); YAMAOKA, Hideyuki, Ibaraki 311-24 (JP); NAKAMURA, Yoshihisa, Osaka 569-11 (JP)
(74) Representative: Woods, Geoffrey Corlett
(86) International application number: JP9704221
(87) International publication number: WO9822626

(57) **Abstract**

In the method of producing reduced iron according to the invention, fine iron oxides and powdery solid reductants are mixed, and mixture of raw materials is charged in the form of fines into a reduction furnace wherein iron oxides are reduced at high temperatures by maintaining a temperature inside the furnace at not less than 1100°C after the mixture of raw materials is formed into a bed of substantially uniform thickness or pressure is applied onto the bed in addition. As the method does not require agglomeration of the mixture of raw materials such as pelletization, the cost of producing reduced iron can be reduced. The method is carried out with ease by use of the system for production of reduced iron according to the invention. Further, high quality hot metal can be produced by charging the reduced iron in hot condition obtained by the method described as above into a shaft furnace or a in-bath smelting furnace for melting at high thermal efficiency.

## Description

### TECHNICAL FIELD

The present invention broadly relates to production of reduced iron, and production of hot metal therefrom. More particularly, the present invention is concerned with a method of and a facility for producing reduced iron by mixing fine iron oxides, for example, fine iron ore, iron-bearing dust, sludge, scale, and the like which are generated at steel mills with powdery solid reductants, for example, coal, charcoal, petroleum cokes, cokes, and the like, and by charging same in the form of fines without agglomeration into a heated furnace for reduction at a high temperature, and further, with a method of producing hot metal by charging the reduced iron kept in a hot condition into a shaft furnace or a in-bath smelting furnace.

### BACKGROUND TECHNOLOGY

With recent growth in production of steel products by means of electric furnaces, much attention has been drawn to a technology of obtaining ferrous material as a feed therefor through solid reduction of iron ores. There has since been disclosed a process, representative of such a technology, wherein solid metallized iron is produced by forming agglomerates, so-called "pellets", from fine iron ore in admixture with powdery solid reductants, and then reducing iron oxides contained in the fine iron ore through heating of the agglomerates at a high temperature (reference: for example, specification of U.S. Patent No. 3,443, 931, and Japanese Patent Laid-open No. H 7 - 238307).

The process of reducing fine iron ore as disclosed in U.S. Patent No. 3,443, 931 described above comprises generally the following steps of :
1) forming green pellets by mixing fine iron ore with powdery solid reductants such as coal, coke, and the like,
2) removing water adhered to the green pellets by heating same in such a temperature range that combustible volatile matter issued therefrom is not ignited.
3) reducing dried pellets by heating same at a high temperature to raise a metallization ratio, and
4) cooling metallized pellets before discharging same out of a furnace.

The conventional process of producing reduced iron as disclosed in U.S. Patent No. 3,443, 931 described above (for the sake of convenience, referred to as "pelletizing process" hereinafter) has fundamental problems as follows:
1) As an agglomerate (pellet) as merely agglomerated does not have sufficient physical strength to withstand handling during the process, it requires drying before charged into a reduction furnace. This entails installation of a drying unit in addition to a pelletizing plant of complex construction, involving fairly high costs of operation and maintenance thereof. Furthermore, owing to a longer time required in the process from a step of drying the pellet to completion of a reduction step, production efficiency of the process is low, and it is difficult to hold down the cost of producing reduced iron.
2) It is impossible to avoid generation of particles outside a predetermined size range during the pelletizing process. As it is necessary to recycle undersize particles to a mixing step, and to crush oversize particles before recycling to the mixing step, the production efficiency is poor.
3) Iron oxides generated at steel mills such as iron-bearing dust, sludge, scale, and the like are among precious ferrous material, however, these are often found in lumpy form when recovered, composed of fine particles bonded together, or in a form too large as pellet feed as in the case of scales. Accordingly, for pelletizing these iron oxides on their own in place of iron ore fine, or in admixture with iron ore fine, it is necessary to pulverize them to a predetermined size beforehand, necessitating installation of a pulverizing apparatus.

It is known that in reduction reaction of pellets, the higher a temperature at which the reaction takes place, the more rapidly the reaction proceeds. Hence, it is essential to heat up the pellets to a predetermined temperature rapidly by increasing a warming rate in order to improve productivity by increasing a reduction reaction rate. The process disclosed in the Japanese Patent Laid-open No. H 7 - 238307 described above is characterized in that for a while after pellets are charged into a furnace, an oxygen containing gas is supplied onto the surface of the charged pellets, causing combustible matter issued from the pellets to be actively combusted so that a temperature on the surface of pellets is elevated to an optimum temperature for reduction by heat of combustion.

The process disclosed in the Japanese Patent Laid-open No. H 7-238307 described above, however, belongs to a category of the pelletizing process consisting of steps of mixing, agglomeration, and drying, hardly solving the problems of the pelletizing process described above.

A furnace provided with a horizontally rotatable hearth (referred to as rotary hearth hereinafter) for heating is drawing attention in producing the reduced iron, and a same type furnace (referred to as rotary hearth furnace hereinafter) is used in the process as disclosed in the U.S. Patent No. 3,443, 931.

The rotary hearth furnace is characterized by its low capital cost as opposed to the case of a rotary-kiln furnace which has been in practical use over many years, however, due consideration should be given to charging of raw materials and discharging of a product since the hearth is horizontally rotated in the former case.

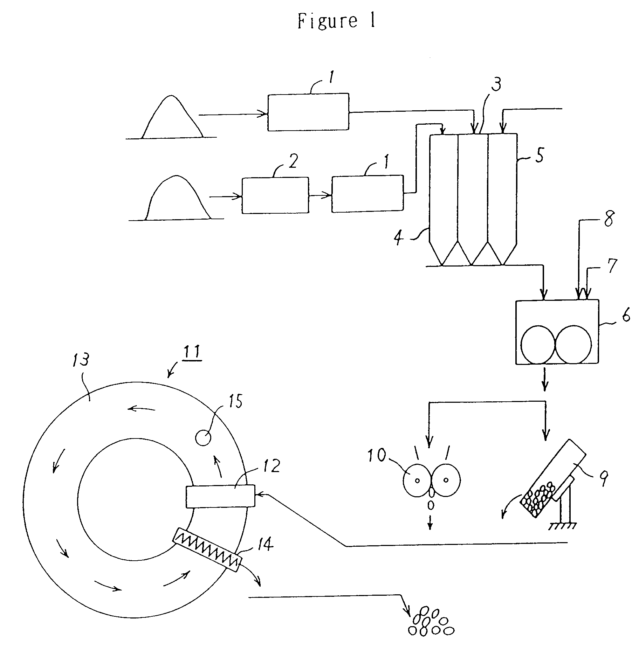

Fig. 1 is a schematic representation showing an example of conventional processes of producing the reduced iron by use of the rotary hearth furnace for heating of raw material. As shown in the figure, fine iron ore 3 crushed to a predetermined size by a crusher 1, and pulverized coal 4 prepared by a dryer 2 and a crusher 1 with bentonite 5 as binder added thereto are kneaded and mixed by a mixer 6 while water 7 and tar 8 are further added thereto. Mixed raw materials thus obtained are agglomerated by a pelletizer 9 or double-roll compactor 10, transferred to a charging area 12 of the rotary hearth furnace 11, and charged into the furnace, producing solid metallized iron by reducing iron oxides in the iron ore at a high temperature every time the rotary hearth 13 makes one turn. The metallized iron obtained is discharged from a product discharge area 14. Reference numeral 15 denotes an exhaust outlet.

When the fine iron oxide and powdery solid reductants are kneaded and mixed after drying and crushing as necessary, a binder such as water, tar, theriac, organic resin, cement, slag, bentonite, quick lime, slightly burnt dolomite, or slaked lime is added thereto if need be.

The mixed raw materials are agglomerated into pellets in the shape of a ball by a desk pelletizer, or briquettes by the double-roll compactor. As the mixed raw materials of a particle size, 0.1 mm or less in diameter, are suitable for pelletizing, and same of a particle size, 1 mm or less, are for briquetting, the materials require prior pulverizaton to a predetermined size. In some cases, drying or curing treatment is applied to the agglomerates (that is, pellets and briquettes) to enhance physical strength thereof.

The agglomerates are sent to an upper part of the rotary hearth furnace via a belt conveyer, and charged via a feeding chute into the furnace so as to be spread in a wide area on the surface of the rotary hearth and smoothed out by a leveler. Subsequently, the agglomerates are heated and reduced while in rotation within the furnace, and turned into metallized iron.

The conventional process of producing reduced iron described above however, has the following problem. That is, the agglomerates, due to powdering occurring thereto before charged into the rotary hearth furnace, will turn into agglomerates composed of particle of various diameters while generating fines, and charged onto the rotary hearth in such a condition as described above. Then, generated fines are blown off by a combusting gas, and adhered in a molten condition to the wall of the furnace, causing troubles to facilities. In addition, the generated fines adhere in a molten condition to the rotary hearth, erode the hearth and roughen the surface of it.

Further, nonuniformity in firing results due to lack of uniformity in the size of the agglomerates, leading to the need of lengthening a firing time required for producing reduced iron of 92% metallization ratio, lowering productivity in producing the reduced iron.

Addition of the binder described above for prevention of an adverse effect of powdering of the agglomerates has been found effective to an extent, however, not successful in complete prevention of the powdering. Furthermore, use of organic binders, which are expensive, results in a higher cost of production while use of inorganic binders having a constituent other than iron, that is, slag constituents, has a drawback of degrading the quality of the reduced iron.

As described in the foregoing, the conventional pelletizing process has a number of problems.

Meanwhile, hot metal has been produced up to date primarily by the blast furnace process. In the blast furnace process, lumpy ferrous raw material and lumpy coke are charged into the furnace from the upper part thereof while hot blast is blown in through tuyeres provided in the lower part thereof so that the cokes are combusted, generating a reducing gas at a high temperature whereby iron oxides, main constituent of the ferrous material, are reduced and melted.

There has recently been developed another method of producing hot metal wherein reduced iron is produced by reducing lumpy ferrous raw material in a shaft reduction furnace, and the reduced iron in a hot condition is charged into a carbon material fluidized bed type melting furnace from the upper part thereof for reduction and melting. This method has already been put to practical application.

Various methods of producing hot metal directly from fine iron ores have also been developed. For example, in Japanese Patent Publication No. H 3-60 883, there has been disclosed a process wherein agglomerates are formed of fine iron ore and pulverized carbon material, the agglomerates are then pre-reduced in a rotary hearth furnace, and discharged at a temperature not less than 1000°C into a smelting furnace having a molten metal bath therein while the pulverized carbon material is fed under the surface of the molten bath, thereby reducing and melting the pro-reduced agglomerates in the smelting furnace. In this instances off-gas discharged from the smelting furnace is recycled into the rotary hearth furnace for use as fuel for pre-reduction.

The conventional technologies described above, however, have drawbacks as follows:

Firstly, the blast furnace process has a drawback of requiring lumpy ferrous raw material and cokes. In this process, cokes are formed in coke ovens through carbonization of coal, and only lumpy cokes are used after screening. Deposits of hard cooking coal for use in making cokes are unevenly distributed in geographical terms. In addition, other major problems with the process are huge capital outlay required in replacing the old coke ovens, and needs for prevention of air pollution caused by operation of the coke ovens. With respect to ferrous raw material, fine iron ores need to be agglomerated into pellets or sinters for use in the process except the case where lumpy ores are used, In view of a tight supply position of lumpy iron ore, and high costs of pellets, however, use of sinters has come to be in the mainstream of the steel industry's practice in Japan, but countermeasures for prevention of air pollution caused by sintering operation poses a major problem to the industry.

In the process of producing hot metal in the shaft reduction furnace, cokes are not required, however, the process has a problem of requiring lumpy iron ore as ferrous raw material as in the case of the blast furnace process.

A process described in Japanese Patent Publication No. H 3-60883 is considered effective, however, has a drawback that fine iron oxides and powdery solid reductants need to be mixed and agglomerated before being charged into a reduction furnace.

In the course of agglomeration, particles outside a predetermined size range are inevitably generated as described hereinbefore. Accordingly, undersize particles are sent straight to a mixing step while oversize particles need to be crushed before recycled to the mixing step, deteriorating efficiency of the process. In addition, since agglomerates as merely agglomerated do not have sufficient strength to withstand handling, the agglomerates need to be dried before charged into the reduction furnace, entailing installation of a drying unit in addition to an agglomeration plant. Costs of operation and maintenance thereof are also required. All these factors add up the production cost of reduced iron. Furthermore time required for agglomeration and drying is relatively long in comparison with that for reduction, adversely affecting the efficiency of a plant as a whole.

In the case of utilizing iron oxides generated at steel mills, such as iron-bearing dust, sludge, scales, and the like, on their own or in combination with iron ores, these are often recovered in the form of "a lump composed of fine particles bonded together", or in "shape too large as pellet feeds" as in the case of mill scales. Accordingly, the iron oxides need to be pulverized beforehand to a predetermined size, necessitating installation of a pulverizing apparatus.

The present invention has been developed to provide a method of and a facility for production of reduced iron in a simple and inexpensive way in place of the conventional pelletizing method, and further, to provide a method of producing high quality hot metal efficiently and at a low cost through a simple process using the reduced iron obtained as above.

### DISCLOSURE OF THE INVENTION

In a method according to the invention, an agglomeration step for ferrous raw material and fuel (a step of agglomerating raw material such as pelletization, and the like), and a drying step, which have been considered essential for pre-reduction of raw material, are dispensed with. More specifically, the method according to the invention is characterized, in that fine ferrous raw material and powdery solid reductants are mixed with each other, and charged in the form of fines without agglomeration into a furnace, heated to not less than 1200°C, thereby reducing iron oxides.

The invention has features comprising methods of producing reduced iron (1) and (2), a facility for carrying out the methods (3), and methods of producing hot metal from the reduced iron (4) and (5) described hereinafter:
(1) A method of producing reduced iron from fine iron oxides comprising following steps of a) through c);
   a) obtaining a raw material mixture by mixing fine iron oxides with powdery solid reductants,
   b) forming a bed of substantially uniform thickness on the hearth of a reduction furnace by charging said raw material mixture in the form of fines into the reduction furnace,
   c) reducing iron oxides by blowing fuel and oxygen-containing gas into the reduction furnace, and burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C.
(2) A method of producing reduced iron from fine iron oxides comprising the following steps of a) through d);
   a) obtaining a raw material mixture by mixing fine iron oxides with powdery solid reductants,
   b) forming a bed of substantially uniform thickness on the hearth of a reduction furnace by charging said raw material mixture in the form of fines into the reduction furnace.
   c) increasing apparent density of the raw material mixture by pressing the bed,
   d) reducing iron oxides by blowing fuel and oxygen-containing gas into the reduction furnace, and burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C.
(3) A facility for carrying out the method (1) described above comprising:
   a mixer for mixing the fine iron oxides with powdery solid reductants;
   a charging apparatus for forming a bed of substantially uniform thickness on the hearth of a reduction furnace by charging the raw material mixture in the form of fines into the reduction furnace; and
   a reduction furnace for reducing the iron oxides contained in the raw material mixture charged therein, the reduction furnace being a rotary hearth furnace comprising:
   a furnace body provided with a feeding inlet for said raw material mixture, a discharge outlet for the reduced iron produced through high temperature reduction of the iron oxides, and an exhaust outlet for off-gas generated therein,
   a hearth installed therein so as to be horizontally rotatable, and
   burners for combusting the fuel after the fuel and the oxygen-containing gas are blown in.

   Further, the method of producing reduced iron from fine iron oxides as described under (2) above may be carried out by a facility further comprising an apparatus for increasing apparent density of the raw material mixture by pressing the bed of the raw material mixture.
(4) A method of producing hot metal from fine iron oxides, comprising steps of a) through f) described below:
   a) obtaining raw material mixture by mixing fine iron oxides with powdery solid reductants;
   b) forming a bed of substantially uniform thickness on the hearth of a pre-reduction furnace by charging the raw material mixture in the form of fines into the pre-reduction furnace;
   c) pre-reducing iron oxides by blowing fuel and oxygen-containing gas into the pre-reduction furnace, and burning the fuel, combustible volatile constituents issued from the powdery solid reductants and the CO gas generated as a result of reduction of the iron oxides by the agency of the powdery solid reductants,so that a temperature inside the furnace is maintained at not less than 1100°C;
   d) discharging the reduced iron obtained through the pre-reduction step from pro-reduction furnace at a temperature not less than 500°C;
   e) reducing and melting the reduced iron in a hot condition discharged through the discharge step described above, by charging the reduced iron together with carbon material and flux into a shaft furnace from the upper part thereof, having a carbon material bed therein, and tuyeres in the lower part thereof for oxygen containing gas blown in therethrough to combust the carbon material disposed in front thereof, generating reducing gas at a high temperature, so that hot metal and molten slag are discharged through a tap hole provided in the lower part of the shaft furnace; and
   f) recovering off-gases generated in the shaft furnace, and recycling a portion of the off-gases into the pre-reduction furnace for use as fuel for pre-reduction.
(5) A method of producing hot metal from fine iron oxides, comprising steps of a) through f) described below:
   a) obtaining raw material mixture by mixing fine iron oxides with powdery solid reductants;
   b) forming a bed of substantially uniform thickness on the hearth of a pro-reduction furnace by charging the raw material mixture in the form of fines into the pro-reduction furnace;
   c) pro-reducing iron oxides by blowing fuel and oxygen-containing gas into the pre-reduction furnace, and burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C;
   d) discharging the reduced iron obtained through the pre-reduction step from the pre-reduction furnace at a temperature not less than 500°C;
   e) reducing and melting the reduced iron in a hot condition discharged through the discharge step described above, by charging the reduced iron together with carbon material and flux into a in-bath smelting furnace from the upper part thereof, the in-bath smelting furnace having molten metal bath and molten slag bath therein, and through the bottom of which gas for agitation is blown into the molten metal bath for stirring up the molten metal bath and molten slag bath while oxygen is blown thereinto from the upper part thereof, so that hot metal and molten slag are discharged through a tap hole provided in the lower part of the furnace, and
   f) recovering off-gases generated in the in-bath smelting furnace, and recycling a portion of the off-gases into the pro-reduction furnace for use as fuel for pro-reductions

The methods of producing hot metal described under (4) and (5) above may be modified by adoption of the method (2) described above, that is, the method of producing reduced iron from fine iron oxides through high temperature reduction of the raw material mixture after increasing apparent density, thereof by pressing the bed formed thereof.

### BRIEF DESCRIPTION OF THE DRAWINGS

Fig. 1 is a schematic illustration showing a conventional process of producing reduced iron by way of example.
Fig. 2 is a schematic view showing a facility for production of reduced iron according to the invention, and a method of producing reduced iron using the facility.
Fig. 3 is a longitudinal section of a rotary hearth furnace, showing a vertical section against the direction of advance of the hearth.
Fig. 4 is a view illustrating the construction of a principal part of a charging apparatus for raw material used for production of reduced iron according to an embodiment of the invention.
Fig. 5 is a view illustrating a conventional method of discharging reduced iron by a screw feeder.
Fig. 6 is a view illustrating a method of discharging reduced iron according to an embodiment of the invention.
Figs 7 is a view illustrating a method of removing reduced iron fines remaining on the hearth according to all embodiment of the invention.
Fig. 8 is a view illustrating a method of removing reduced iron fines remaining on the hearth according to another embodiment of the invention.
Fig. 9 is a view illustrating a method of removing reduced iron fines and adhesive matter remaining on the hearth according to yet another embodiment of the invention.
Fig. 10 is a view illustrating a method of removing reduced iron fines and adhesive matter remaining on the hearth according to further embodiment of the invention.
Fig. 11 is a view illustrating a method of preventing reduced iron fines from remaining on the hearth according to an embodiment of the invention.
Fig. 12 is a schematic illustration showing a method of producing hot metal in a shaft furnace, and a facility for carrying out the method.
Fig. 13 is a schematic illustration showing a method of producing hot metal in a in-bath smelting furnace, and a facility for carrying out the method.
Fig. 14 is a view illustrating a test furnace for high temperature reduction used in carrying out a test for an example.

### BEST MODE OF CARRYING OUT THE INVENTION

A method of, and a facility for producing reduced iron, and a method of producing hot metal, according to the invention, are described in detail hereinafter.

The method of producing reduced iron according to the invention (the invention referred to in (1) and (2) above) is a process wherein fine iron oxides are reduced at a high temperature by charging mixture of fine iron oxides and powdery solid reductants in the form of fines into a reduction furnace, forming the mixture into a bed on the hearth of the furnace, or further increasing apparent density of the mixture by pressing the bed , and blowing fuel and oxygen containing gas into the reduction furnace, and burning the fuel, combustible volatile matter (VM) issued from the powdery solid reductants and the CO gas generated as a result of reduction of the iron oxides by the agency of the powdery solid reductants, so that a temperature inside the furnace is maintained at not less than 1100°C. The invention (1) above relates to the method of reducing iron oxides without pressing the bed while the invention (2) above relates to the method of producing reduced iron after pressing the bed.

In this context, "fine iron oxides" refer to fine ferrous raw materials containing iron oxide as its main constituent, and more specifically, to aforesaid fine iron ore and iron-bearing wastes generated at stool mills such as dust, sludge, scale, and the like. Each of those can be used on its own or in mixture of two or more.

Then, "powdery solid reductants" refer to powders of a solid material containing mainly carbon, such as coal, charcoal, petroleum cokes, cokes, and the like. Each of those can also be used on its own or in a mixture of two or more.

Further, "uniform thickness" doe not necessarily refers to even thickness in the strict sense. Accordingly, "a bed of substantially uniform thickness" refers to a bed having no pronounced difference in the level of the top surface thereof enabling reduction to proceed uniformly, causing no practical inconvenience.

There is no particular restriction on a type of the reduction furnace used in carrying out the invention, however, the rotary hearth furnace as illustrated in Fig. 1 shown hereinbefore, that is, the reduction furnace provided with a horizontally rotatable hearth (rotary hearth) is advisable because of its capability for continuous operation.

In the method of producing reduced iron according to the invention, firstly mixture (mixture of raw materials) is prepared by mixing fine iron oxides with powdery solid reductants.

In mixing fine iron oxides with powdery solid reductants, some amount of water or binder (bentonite, lime, organic binders, or the like), or both may be added. This facilitates uniform and rapid mixing, and furthermore, formation of a bed on the hearth.

Lime (burnt lime, limestone, or the like) may also be added for adjustment of basicity of slag constituent contained in the reduced iron. This enables concentration of sulfur contained in off-gas emitted from the reduction furnace to be lowered. Use of limestone also contributes to improvement in a unit fuel consumption as the effect of endothermic reaction accompanying decomposition of limestone is compensated for during firing in the reduction furnace.

In the method according to the invention, there is no need of agglomerating the mixture of raw materials, and accordingly, coarse crushing of scales, and the like suffices the need, requiring no pulverization.

In the case of using dust containing zinc (Zn), and the like for the raw material, a possibility of the quality of a product being degraded due to residual zinc remaining in the reduced iron is a matter of concern, however, a metal of a low boiling point such as zinc is evaporated in the furnace used in the method according to the invention which is kept at a high temperature, and discharged together with off-gas out of the furnace. It is possible therefore not only to lower the content of such metals having a low boiling point as zinc, and the like remaining in the reduced iron product, improving the quality of the product, but also to recycle and use the metals which can be enriched in dust arrested by a dust collecting equipment.

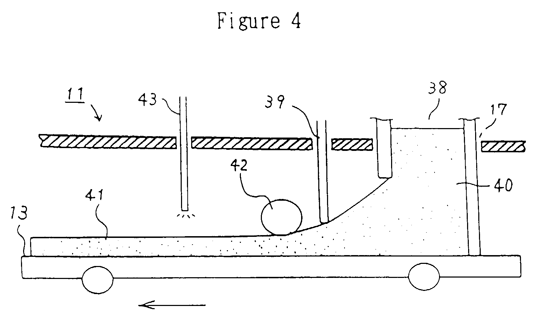

In the next step, the mixture of the fine iron oxides and powdery solid reductants as it is (in the form of fines) is charged into the reduction furnace, and formed into the bed of substantially uniform thickness on the surface of hearth of the reduction furnace. Such a bed may be formed by, for example, charging the mixture 40 of raw material onto a platform car constituting the rotary hearth 13 through a raw material charging inlet 38, and making same pass under a leveler 39 as shown in Fig. 4 given hereinafter. The thickness of a bed 41 can be adjusted to a desired thickness with ease by adjusting the height of the lower end of the leveler 39, from the surface of the hearth.

Meanwhile, there are cases where many voids occur inside the bed when the bed is formed arbitrarily depending on a condition under which the bed is formed, delaying transfer of heat from the surface of the bed, receiving heat, to the depths (the bottom part) of the bed with the result that reduction at the depths of the bed is delayed. There are also cases where a problem arises that fine particles on the surface of the bed are blown off by combusting gases, and taken out of the furnace together with off-gases.

It is effective to add a step of process of increasing apparent density of the raw material mixture by pressing the bed formed on the surface of the hearth for overcoming such problems.

For example, as shown in Fig. 4 given hereinafter, it is quite effective to apply pressure on the bed 41 using a pressing roller 42 or the like in forming the raw material mixture 40 into the bed of substantially uniform thickness by use of the leveler 39. More specifically, the pressure applied on the bed diminishes the number of the voids within the boil, bringing fine particles into intimate contact with each other, and preventing dispersion of fine particles from the bed as well as promoting transfer of heat within the bed. Consequently, reduction is promoted. Further, improved contact between the iron oxides and the solid reductants is considered to contribute also to promotion of reduction.

In order to prevent more effectively dispersion of fine particles, it is effective to spray a cement-containing liquid on the bed after it is formed or after apparent density of the raw material mixture is increased by pressing the bed. For example, as shown in Fig. 4, cement milk, that is, an aqueous solution of cement, may be sprayed on the surface of the bed 41 through a nozzle 43.

Subsequently, iron oxides in the bed is reduced by blowing fuel and oxygen-containing gas into the reduction furnace, and bur fuel ning the fuel, combustible volatile constituents issued from the powdery solid reductants and the CO gas generated as a result of reduction of the iron oxides by the agency of the powdery solid reductants, so that a temperature inside the furnace is maintained at not loss than 1100°C thus producing reduced iron. The bed refers to the bed formed on the hearth by use of the leveler, or the bed on which pressure is further applied to increase apparent density of the raw material mixture.

Ordinary fuel such as natural gas, heavy oil, or the equivalent is used for fuel used in the process. Combustible gases are discharged as off-gas from a smelting furnace (a shaft furnace or a in-bath smelting furnace) operated in later steps of the process, and may be used for the fuel.

For the oxygen-containing gas, air or gas containing oxygen in concentration equivalent to or somewhat higher than that for air may preferably be used.

A possibility of a combusting gas or air for combustion causing delay in reduction process of iron oxides or reoxidation of reduced iron produced through reduction of iron oxides, in the course of the reduction process as described above, is a matter of concern. This is deemed unlikely to occur, however, for the following reason. That is, in a period when the combustible constituents are issuing from the solid reductants and CO gas, a product of reduction, is generated through progress in the reduction process, the surface of the bed is covered by the combustible constituents or CO gas resulting from reduction, preventing reoxidation of the reduced iron produced. A ratio of CO gas to CO₂ gas contained in combusting gas may be adjusted such that the ratio falls within a range so as not to permit reoxidation of metallized iron by adjusting a ratio of an amount of fuel to an amount of air, supplied through burners, in a period when a generation speed of CO gas declines close to the end of the reduction process.

Accordingly, with the method according to the invention, there is no need of placing the solid reductants additionally on the bed of the raw material mixture, enabling simplification of the charging apparatus.

A temperature in the furnace for high temperature reduction is set at not less than 1100°C . Reduction will proceed even at a temperature below 1100°C , however, a reduction rate is so low in such a temperature range that such a practice is undesirable for industrial production. It is desirable to maintain a temperature in the furnace on the order of 1200 to 1400°C in order to attain a sufficiently high rate of reduction because a temperatures at the bed of the raw material mixture (referred to some- times as a burden bed hereinafter) becomes lower than the temperature in the furnace due to the effect of endothermic reaction of the iron oxides during reduction.

The temperature in the reduction furnace, however is to be adjusted depending on condition of progress in reduction, properties of fine iron oxides and powdery solid reductants, a mixing ratio, and the like. More specifically, in a period when raw materials charged into the furnace are still at low temperatures immediately after charging thereof it is advantageous from the viewpoint of promoting reduction to maintain a temperature in the furnace on the higher side so that temperatures of charged rag materials are raised. Further, since melting points of the charged raw materials vary depending on chemical composition of gangues contained in iron ore and same of ash content in coal, making up the raw material, due care should be exercised to prevent melted raw materials from flowing out during the reduction process by controlling the temperature in the furnace according to the melting points provided that generation of an adequate amount of a liquid melt within the charged raw materials, which is beneficial for heat transmission and promotion of reduction, should be made active use of.

When reducing iron oxides at high temperature, it is desirable to raise rapidly a temperature of the burden bed to an optimum temperature for reduction in order to shorten time required for reduction. To this end, in heating the burden bed, the oxygen-containing gas may be supplied to the surface of the burden bed to combust the combustible volatile constituents issued from the solid reductants oil the surface of the burden bed until issuing of the volatile constituents is substantially ceased, and may continue heating so that the temperature in the furnace reaches to not less than 1100°C, preferably, not less than 1200 to 1400°C after issuing of the volatile constituent has ceased.

Then, for preventing reduced iron from sticking to the hearth in the reduction furnace, a method may be adopted whereby the powdery solid reductants are spread to form a thin film over the hearth of the reduction furnace, and the burden bed is formed on the thin film.

With the methods of producing reduced iron according to the invention (the methods (1) and (2) described hereinbefore), fine iron oxides are mixed simply with powdery solid reductants, mixture thereof in the form of fines is charged onto the hearth inside the reduction furnace, and heated to a high temperature for reduction, producing reduced iron. That is, the methods are based on a basic concept of dispensing with stops of agglomeration (pelletization) and drying, and have pronounced effects as follows:
1) There is no need of screening fine iron oxides such as iron ore, and the equivalent, and solid reductants into a specific particle size fractions as required in the case of conventional methods wherein raw material to be reduced is agglomerated. Even in the case of utilizing oxides (for example, scales) discharged from steel mills for raw material in carrying out the methods of the invention, simple coarse crushing suffices needs, and pulverization as practiced in the conventional methods is unnecessary.
2) In comparison with the conventional methods wherein a fair amount of time is required for carrying out an agglomeration step, processing time of the methods according to the invention wherein mixed raw material, as it is, is simply charged onto the hearth of the reduction furnace is quite short, enhancing efficiency of plant utilization, and facilitating operation and maintenance of a plant.
3) The methods according to the invention do not require a drying step because mixture of raw material in the form of fines is simply charged into the reduction furnace and formed into a bed of substantially uniform thickness on the surface of the hearth whereas pelletization requires a drying step to increase the strength of pellets which do not have sufficient strength as merely agglomerated, for prevention of disintegration thereof when being handled.
4) More specifically, with the methods according to the invention, steps of preparing (pulverization and sizing) , agglomerating (pelletizing), and drying raw material are dispensed with, contributing to significant improvement in production efficiency and significant reduction in the cost of producing reduced iron.
5) In the case of using dust containing zinc (Zn) for raw material, a possibility of the quality of a product being degraded due to residual zinc remaining in the reduced iron is a matter of concern, however, a metal of a low boiling point such as zinc is evaporated in the furnace as used in the method according to the invention, which is kept at high temperatures, and discharged together with off-gas out of the furnace. It is possible therefore not only to lower the content of such metals having low boiling point as zinc, and the like remaining in the reduced iron product improving the quality of the product, but also to recycle and use the metals which can be enriched in dust arrested by a dust collecting equipment.

The facility for producing reduced iron according to the invention (the invention described hereinbefore in (3) ) is the facility for carrying out the method of the invention described in (1) hereinbefore.

The facility comprises a mixer for mixing the fine iron oxides with the powdery solid reductants, a charging apparatus for forming a bed of substantially uniform thickness on the hearth of the reduction furnace by charging the raw material mixture in the form of fines into the reduction furnace, and a rotary hearth furnace for reducing the iron oxides contained in the raw material mixture charged therein. The rotary hearth furnace comprises a furnace body provided with a feeding inlet for the raw material mixture, a discharge outlet for the reduced iron produced through high temperature reduction of the iron oxides, and an exhaust outlet for off-gas generated therein, the hearth which is installed therein so as to be horizontally rotatable, and burners for combusting fuel after the fuel and the oxygen-containing gas are blown in.

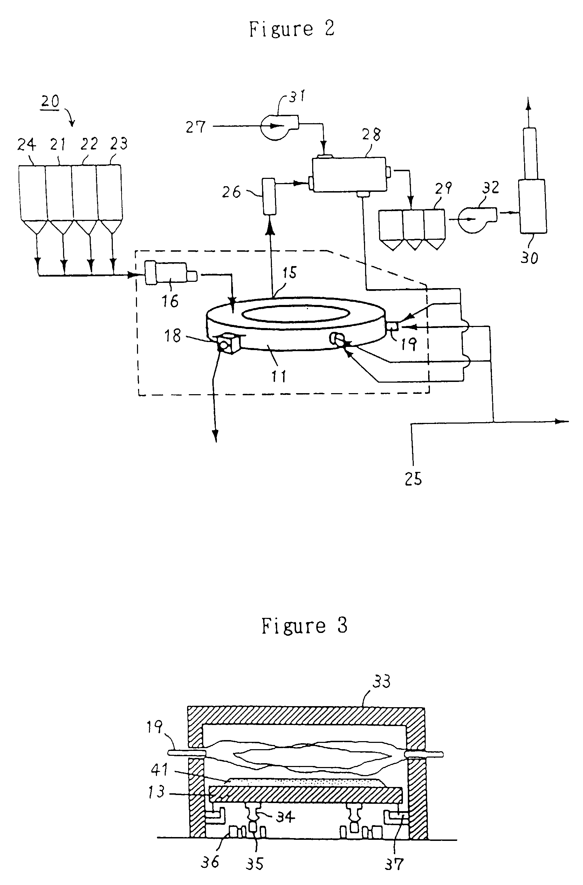

Figs. 2 to 4 are views for illustrating the facility for producing reduced iron described in (3) above. Fig. 2 is a schematic illustration shoving the facility as a whole of, and the process for producing reduced iron. A part surrounded by the broken line in the figure shows the facility according to the invention. Fig. 3 is a sectional view of the rotary hearth furnace, showing a vertical section crossing the direction of advance of the hearth. Fig. 4 is a longitudinal sectional view of the charging apparatus according to an embodiment of the invention, showing principal parts in parallel with the direction of advance of the rotary hearth.

As shown in Fig. 2, the facility for producing reduced iron according to the invention comprises a mixer 16 for mixing the fine iron oxides with the powdery solid reductants, the charging apparatus not shown (disposed above the rotary furnace 11 as shown in Fig. 4) and the rotary hearth furnace 11. The rotary hearth furnace is provided with a charging inlet 17 for feeding the raw material mixture (refer to Fig. 4), a discharge outlet 18 for reduced iron, and an exhaust outlet 15 for gases (off-gas) generated in the furnace and burners 19 for combusting fuel after the fuel and oxygen-containing gas are blown in.

In an embodiment shown in the figure, a binder 23 and dust 24 in addition to fine iron oxides (fine iron ore) 21 and powdery solid reductants 22 are sent from hoppers 20 for receiving raw materials to a mixer 16 for mixing. A portion of off-gas 25 from a smelting furnace, used for generation of electric power, and the like, is used as fuel used in the method. Air 27 preheated by heat generated through combustion of gases (off-gas) exhausted from an exhaust outlet 15 in an off-gas combustion apparatus 26 is used for oxygen-containing gas. The off-gas is discharged to atmosphere via a dust collector 29 and a desulfurization apparatus 30 after passing through a heat exchanger 28. Reference numerals 31 and 32 denotes a blower, respectively.

As shown in Fig. 3, the hull of the rotary hearth furnace is a furnace body 33, inside which a hearth 13 horizontally rotatable (rotary hearth) is installed. A single track 34 is attached to the underside of the hearth 13, and the hearth 13 is rotated at a predetermined speed by driving wheels 35 fixed by a driving means 36. The inside of the furnace is sealed by sealing water 37. A bed 41 of the raw material mixture charged on the hearth 13 is reduced by heat generated through combustion of the fuel blown in through the burner 19.

Referring to Fig. 4, the charging apparatus provided with a raw material charging inlet 38 and a leveler 39 is installed at the charging inlet 17 of the rotary hearth furnace 11. The raw material mixture 40 in the form of fines is charged into the furnace through the raw material charging inlet 38, and thickness thereof is adjusted while passing under the leveler 39 so that the bed 41 of substantially uniform thickness is formed on the platform car constituting the hearth 13.

As shown in Fig. 4, the charging apparatus is further provided with a pressing roller 42 as means for pressing the bed 41 of the raw material mixture. By use of the charging apparatus provided with the pressing roller 42, the method (2) of producing reduced iron according to the invention is carried out, comprising a step of increasing apparent density of the raw material mixture by pressing the bed 41 of the raw material mixture formed on the hearth by means of the pressing roller 42.

With further reference to Fig. 4, the apparatus is provided with a nozzle 43 for spraying a cement-containing liquid. After the bed is formed or apparent density of the raw material mixture is increased by pressing the bed as described hereinbefore, cement milk or the like can be sprayed on the bed using the nozzle 43.

In producing reduced iron by use of the facility for production of reduced iron as described above, a variety of methods and apparatuses are available for discharging reduced iron product out of the hearth furnace or for keeping the hearth clean by removing reduced iron fines remaining the hearth with out being discharged are described specifically hereinafter.

In a conventional method of producing reduced iron, agglomerates (pellets) are laid on the hearth to a thin thickness of 10 to 20 mm inside a rotary hearth furnace, inside which a temperature is maintained in the range of 1100 to 1300°C, the temperature of the agglomerates rises to not less than 900°C mainly by heat radiated from the inner wall of the furnace, the agglomerates are reduced and sintered while adjusting a rotation speed of the hearth such that a predetermined metallization ratio is attained every time the hearth completes one turn, and products are discharged from a discharge outlet by a screw feeder.

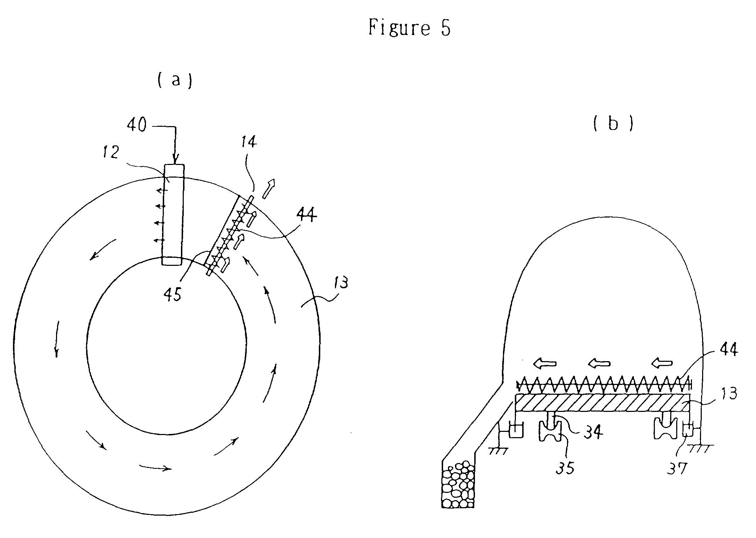

Fig. 5 is a schematic illustration of a method of discharging reduced iron by the screw feeder used conventionally for discharging refuse, Fig. 5 (a) a top view of the rotary hearth, and Fig. 5 (b) a longitudinal sectional view of the vicinity of the discharge outlet. As shown in the figure, while the raw material mixture 40 charged onto the rotary hearth 13 from a raw material charging area 12 makes one turn accompanying a rotation of the hearth 13, iron oxides in the raw material are reduced at high temperatures, and discharged as reduced iron from the product discharge area 14 by the screw feeder. Reduced iron, after reaching the screw feeder 44, is transferred in the direction (as shown in the figure by the arrows in blank) at right angles to the direction of advance of the hearth 13 by rotation of the screw feeder, and discharged towards the peripheral side of the hearth 13. Further, immediately behind the screw feeder 44, a stopper fence 45 for storing reduced iron is installed. In the case of an embodiment shown in the figure, a single track 34 is provided under the hearth 13 , and the hearth 13 is rotated at a predetermined speed by driving wheels 35 fixed. The inside of the furnace is sealed by the sealing water 37.

As it takes time for reduced iron to reach the peripheral side of the hearth and discharged by the screw feeder, quantity of reduced iron residing in front of the screw feeder increases. Particularly, reduced iron located on the edge of the hearth, on the side of the inner circumference thereof, ends up staying in the furnace for a long time because same needs to be transferred for a distance from the inner circumference side to the external circumference side, and further, is caused to be mixed up with reduced iron placed at other parts of the hearth.

To overcome such a problem, reduced iron produced by firing in the rotary hearth furnace needs to be discharged from the furnace rapidly. To this end, a number of methods described hereinafter may be adopted.

Production of reduced iron may be carried out by use of a method whereby reduced iron produced through reduction of iron oxides in the reduction furnace having the rotary hearth is discharged by, for example, a pushout device reciprocatively movable in the direction at right angles the direction of advance of the hearth.

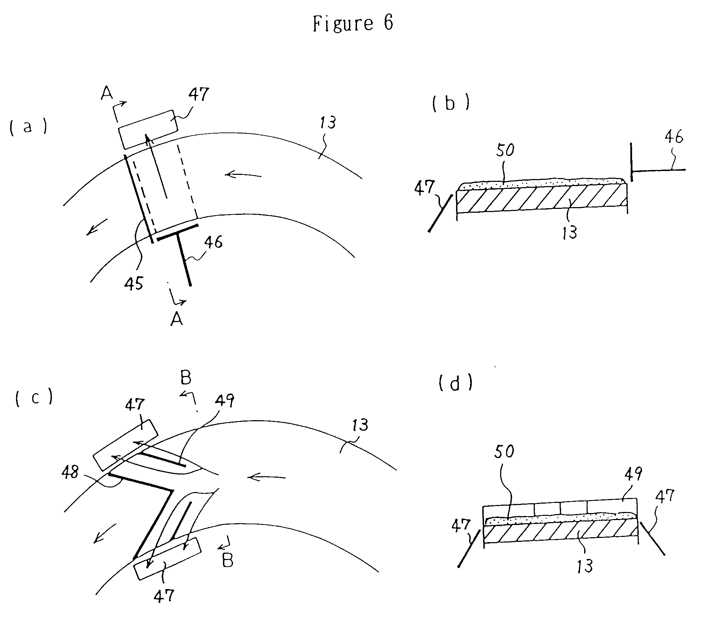

Figs. 6 (a) and (b) are views illustrating the method according to an embodiment of the invention, using a pusher as the pushout device. Figs. 6 (a) is a schematic plan view, and (b) a sectional view taken on line A - A of Fig. 6 (a). As shown in the figures, the pusher 46, in plate form, serving as the pushout device, and reciprocally movable in the direction at right angles to the direction of advance of the hearth 13 is disposed on the side of the inner circumference of the hearth 13 (outside the hearth) in the product discharge area of the rotary hearth furnace.

Reduced iron advancing towards the product discharge area accompanying rotation of the hearth 13 is pushed out of the peripheral side of the hearth 13 by movement of the pusher 46 in the direction of the arrow, and discharged via a discharge chute 47. In the embodiment shown in the figure, since a stopper fence 45 is provided on the downstream side (in the direction of advance of the hearth) of a range of movement of the pusher 46 as shown by broken lines, and the pusher 46 moves along the stopper fence 45, it is ensured that all the reduced iron 50 is discharged without any leftover. The pusher 46, after reaching the peripheral edge of the hearth 13, returns to its original position, and moves in the direction of the arrow for a next discharge operation.

Production of reduced iron may be carried out by a method whereby reduced iron is discharged towards both sides of the hearth along a discharge guide fence provided on the hearth, and formed in the shape resembling the letter V based at the center across the hearth, and spread in the direction of advance of the hearth instead of the method by the pushout device described above.

Figs. 6 (c) and (d) are views illustrating the method according to an embodiment of the invention. Figs. 6 (c ) is a schematic plan view and (d) a sectional view taken on line B - B of Fig. 6 (c). As shown in the figures, a discharge guide fence 48 formed in the shape resembling the letter V, based at the center of the hearth 13 crosswise, and spreading in the direction of advance of the hearth 13 (towards downstream), is provided in the product discharge area of the rotary hearth furnace on the hearth 13, the spread on respective sides of V forming an angle of 45° with the direction of advance of the hearth 13.

When reduced iron transferred to the product discharge area accompanying rotation of the hearth 13 reaches the discharge guide fence 48, reduced iron is split along the discharge guide fence 48 to the right and the left, and guided to discharge chutes 47 provided on both sides of the hearth 13. In the embodiment shown in the figure, supplementary guide fences 49 are provided before the discharge guide fence 48 (on the upstream side) and in parallel therewith to smooth out discharge flow so that reduced iron 50 is discharged without stagnation.

There is no particular restriction on the angle at which the discharge guide fence is installed, however, from the viewpoint of discharging reduced iron rapidly out of the furnace without stagnation of reduced iron on the hearth, it is desirable to install the discharge guide fence to form 45° with the direction of advance of the hearth on respective sides thereof.

The discharge guide fence having a sufficient height so as not to permit reduced iron reaching the discharge area to go over before guided to the discharge chutes may be used.

With the methods described, reduced iron produced by firing in the rotary hearth furnace can be discharged rapidly out of the furnace, preventing a decline in metallization ratio due to reoxidation of reduced iron as described hereinbefore, and avoiding a decrease in a heating area on the hearth resulting from installation of a cooling apparatus in order to prevent reoxidation. Thus productivity of reduced iron can be maintained.

In the conventional processes of producing reduced iron described in the foregoing, when charging agglomerates (pellets) into the rotary hearth furnace, powdering occurs to the agglomerates, generating fines. Even after charging, cracking occurs during reduction at a high temperature, generating fines. Fines thus generated are reduced into metallized iron powders (reduced iron fines) in the rotary hearth furnace. The reduced iron fines penetrate through a gap between the stopper fence installed in the discharge area and the hearth, stay on the hearth without being discharged, recycled to the raw material charging inlet accompanying rotation of the hearth, and subjected to heating. Thus the reduced iron fines are circulated repeatedly, and stay on in the furnace.

The reduced iron fines staying in the furnace remain in powdery form for a while, however, after a length of time, reduced iron fines are sintered with each other, and stick to the hearth as adhesive matter. Before long, the hearth will be in a condition as if coated by a steel plate, and asperities are caused to occur on the surface of the hearth due to thermal deformation. With such asperities occurring on the surface of the hearth, irregularities in firing results when firing raw material with the result that not only deterioration in metallization ratio of reduced iron but also operational trouble may occur, posing a risk of major operational problems. Furthermore, iron adhered to the hearth bricks creates a cause for breakage of the bricks due to exfoliation when mechanical force is applied thereto.

In the method of producing reduced iron according to the invention, the raw material mixture in the form of fines is charged into the reduction furnace as it is, and formed into a bed-like shape. Upon completion of the reduction process, it is in the form of a plate as it is sintered in a bed-like condition. Still, as generation of fines is unavoidable, countermeasures to cope with such a problem described above are required to maintain stable operation on a long term basis.

For example, a method of removing reduced iron fines remaining on the hearth by blowing off with injected gas flow between the reduced iron discharge area and the raw material charging area may be used as a countermeasure. In this context, "between the reduced iron discharge area and the raw material charging area" refers to an interval on the hearth from the reduced iron discharge area to the raw material charging area along the direction of advance of the hearth, where neither raw material nor reduced iron produced therefrom is placed on.

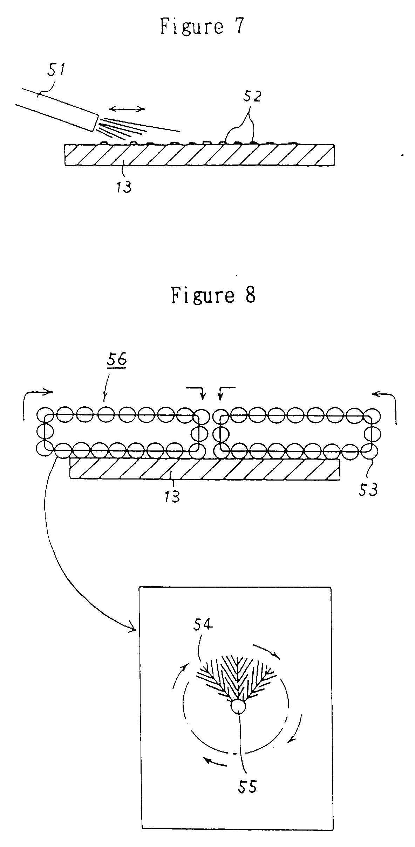

Fig. 7 is a schematic illustration showing the method according to an embodiment of the invention. The figure shows a section crossing the direction of advance of the hearth. As shown in the figure, a nozzle 51 for gas injection is disposed in a manner tilted downward towards the surface of the hearth, and remaining reduced iron fines 52 is blown off by gas injected from the nozzle 51 , keeping the surface of the hearth clean.

There is no restriction on an angle formed between the nozzle and the surface of the hearth, and a height of the nozzle from the surface of the hearth. Both may be adequately adjusted so as to blow off remaining reduced iron fines and effectively remove same from the surface of the hearth.

Gas may be injected towards the direction of advance of the hearth front the nozzles disposed side by side along the direction at right angles to the direction of advance of the hearth, however, as shown in the figures, it is desirable to inject gas towards the direction at right angles to the direction of advance of the hearth 13, or the direction substantially similar thereto from reciprocatively movable nozzles 51 by moving same as shown by the arrow in the figure.

In the case that the nozzle for gas injection is circular or substantially circular in section at the tip thereof, a plurality of the nozzles, instead of a single nozzle, may preferably be disposed in parallel around the periphery of the hearth. Nozzles flat and spreading in the direction of the circumference of the hearth in section at the tip thereof may also be used.

There is no particular restriction on the kind of gas injected, however, from the viewpoint of protection of the hearth bricks and prevention of reoxidation of remaining reduced iron fines, nitrogen gas is preferable. Further, there is no restriction on injection pressure of gas, and the injection pressure may be adequately adjusted so as to be able to remove reduced iron fines from the hearth effectively.

Production of reduced iron may be carried out by use of a method of removing reduced iron fines remaining on the hearth by sweeping same out between the reduced iron discharge area and the raw material charging area with brooms provided with a rotatable feather. In this context "a broom provided with a rotatable feathers" refers to a device capable of sweeping out reduced iron fines remaining on the hearth, and is not limited to a broom having a feather or feather-like object. A broom provided with a hair-like object of a predetermined hardness and thickness (so called brush) or the equivalent may be used.

For example, a cylindrical broom surrounded by a cleaning brush and rotatable in one direction and reverse direction around the axis thereof (that is, rotatably reciprocating) may be used for the broom provided with the rotatable feather. The broom 53 provided with the rotatable cleaning brush as shown in an enlarged view of Fig. 8 corresponds to the aforesaid broom.

The remaining reduced iron fines are removed from the surface of the hearth by sweeping same out with such type of the broom provided with the rotatable feather, the broom being rotated in one direction or reverse direction as appropriate while reciprocatively moved in the direction at right angles or substantially right angles to the direction of advance of the hearth.

Fig. 8 is a schematic illustration of the method according to a preferred embodiment of the invention, showing a vertical sectional view to the direction of advance of the hearth.

In this embodiment, for the brooms provided with the rotatable feather, use is made of a plurality of groups 56 composed of the cylindrical brooms 53 (refer to the enlarged view) provided with a cleaning brush 54 attached to the peripheral surface thereof and rotatable in one direction and reverse direction around the axis 55 of the cylindrical broom 53 which are grouped in annular fashion on a plane normal to the axis of the cylindrical broom 53 . More specifically, a plurality (two in the figure) of groups 56 of the brooms 56 provided with the rotatable feather are disposed between the reduced iron discharge area and the raw material charging area across the hearth 13 , and the reduced iron fines remaining on the hearth are removed by rotating respective brooms 53 provided with the rotatable cleaning brush, composing each group 56, in one direction or reverse direction as appropriate while rotating each group 56 itself in annular ring in one direction or reverse direction at right angles or substantially at right angles to the direction of advance of the hearth 13. A single group 56 in annular ring of the brooms 53 may be disposed on the hearth 13, and reciprocatively moved in the direction crossing at right angles or substantially at right angles to the direction of advance of the hearth while being rotated as described above.

By use of the groups of the brooms provided with the rotatable cleaning brush, each in annular ring formation, the remaining reduced iron fines can be effectively removed in short time, keeping the surface of the hearth clean.

There is no particular restriction on the width of the brooms provided with the rotatable feather, however, the width same as that of the rotary hearth is preferable.

There is no particular restriction on a transfer speed of the brooms provided with the rotatable feather however, a speed same as or higher than that of the hearth is required in case that the entire surface of the hearth is to be cleaned by a group of the brooms provided with the rotatable feather, having the width same as that of the hearth.

In case that reduced iron fines as well as adhesive matter remain on the hearth, production of reduced iron may preferably carried out by use of a method whereby the reduced iron fines and adhesive matter are removed by scraping same off with a scraper reciprocatively movable in the direction crossing the direction of advance of the hearth between the reduced iron product discharge area and the raw material charging area, and having the lower edge kept in touch with the hearth.

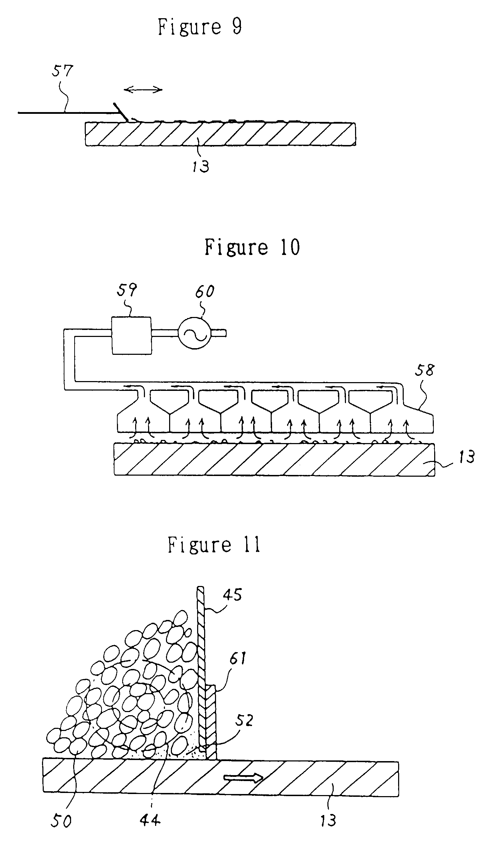

Fig. 9 is a schematic illustration of the method according to an embodiment of the invention, showing a vertical sectional view to the direction of advance of the hearth. As shown in the figure, the scraper 57 is disposed such that the lower edge thereof is kept in touch with the surface of the hearth and the scraper is reciprocatively movable in the direction crossing the direction of advance of the hearth 13. In this context, the direction crossing the direction of advance of the hearth refers to the direction intersecting the direction of advance of the hearth at right angles or substantially at right angles (the direction forming plus 20° or less with the direction intersecting the direction of advance of the hearth at right angles or minus 20° or greater to same).

In the method, reduced iron fines and adhesive matter remaining on the hearth are scraped off and removed from the surface of the hearth by causing the scraper to reciprocatively move in the direction crossing the direction of advance of the hearth. From the viewpoint of shortening a distance of movement, reciprocative movement in the direction at right angles to the direction of advance of the hearth may be preferable. As shown in the figure, the scraper with the tip thereof tilted at an appropriate angle is effective in scraping off foreign matter, and can remove adhesive matter adhered to the hearth. A scraper having width substantially same as that of the hearth is preferable.

Production of reduced iron may be carried out by use of a method whereby reduced iron fines remaining on the hearth is removed from the surface of the hearth by sucking same in through a suction hood provided between the reduced iron discharge area and the raw material charging area.

Fig. 10 is a schematic illustration showing a method of sucking in by use of a suction blower according to an embodiment of the invention. The figure shows a vertical sectional view to the direction of advance of the hearth.

As shown in the figure, the suction hood 58 (partitioned into six compartments in the figure) is provided over the hearth between the reduced iron discharge area and the raw material charging area, and the partitioned compartments are joined together into a single pipe and finally connected with a suction blower 60 via a bag filter 59. Reduced iron fines are sucked in by the suction blower 60 and recovered by the bag filter 59.

The suction hood may preferably be provided covering the whole width of the hearth 13.

In the case that reduced iron is discharged by the conventional type screw feeder instead of the aforesaid pushout device or the discharge guide fence in the shape of the letter V, use is preferably made of a method wherein a scraper type gate with the lower end thereof kept in contact with the hearth is provided immediately behind (as seen in the direction of advance of the hearth) the fixed stopper fence installed in the reduced iron discharge area to prevent reduced iron fines from remaining on the hearth.

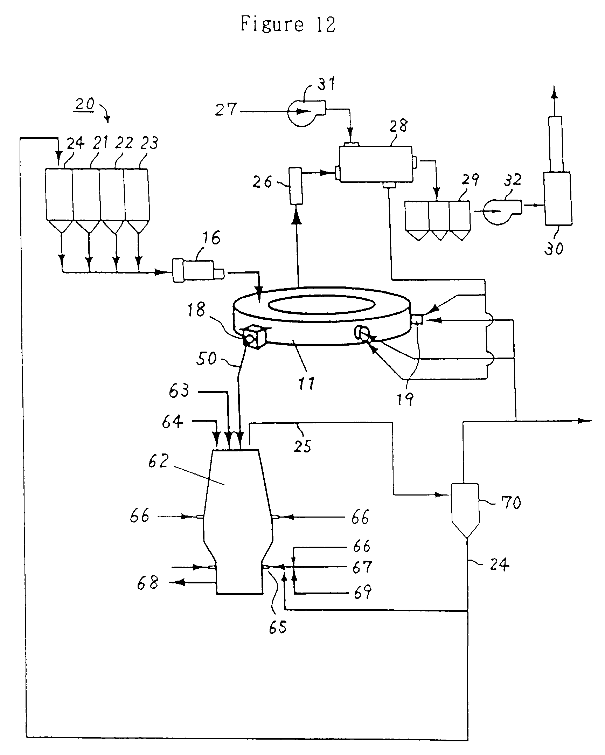

Fig. 11 is a schematic illustration of the method according to an embodiment of the invention, showing a longitudinal sectional view in parallel with the direction (shown by the arrow in the figure) of advance of the hearth As shown in the figure, the scraper type gate 61 with the lower end thereof kept in contact with the hearth is provided in the direction of advance of the hearth of the fixed stopper fence 45 for storing reduced iron products 50, installed behind (on the downstream side) the screw feeder 44.

A small gap exists between the lower end of the fixed stopper fence 45 and the surface of the hearth, and increases in size gradually due to friction between reduced iron and the surface of the hearth during discharging of reduced iron. Consequently, reduced iron fines 52 can pass through the gap, remaining on the heath without being discharged, and subjected to heating after returning to the raw material charging area accompanying rotation of the hearth 13. While such circulation is repeated, the reduced iron fines stay on inside the rotary hearth furnace. To cope with this problem, the scraper type gate 61 is provided behind the fixed stopper fence 45. The scraper type gate 61 is disposed so as to be lightly pressed down and kept in contact with the surface of the hearth 13, closing the gap. Therefore, the reduced iron fines passing through the gap between the fixed stopper fence 45 and the surface of the hearth are blocked by the scraper type gate 61, and the reduced iron fines 52 are prevented from remaining on the hearth, maintaining the surface of the hearth clean.

The scraper type gate 61 may preferably be installed immediately behind the fixed stopper fence 45, that is, in intimate contact with the fixed stopper fence 45 as shown in the figure provided that the scraper type gate 61 can be kept lightly pressed down on the hearth 13 without any difficulty. Further, in case that the gap between the fixed stopper fence 45 and the surface of the hearth varies in height in the direction across the hearth, the scraper type gate 61 is preferably divided across the width of the hearth.

With the method, the hearth can be kept clean by forestalling reduced iron fines from remaining on the hearth.

The methods of producing reduced iron according to the invention are carried out with ease by use of the apparatuses according to the invention hereinbefore described, fully demonstrating features of the invention.

The methods of producing hot metal according to the invention (the methods (4) and (5) above according to the invention) is concerned with the method whereby hot metal is produced using reduced iron in hot condition produced by the method (1) above according to the invention. The method (4) relates to the case of using the shaft furnace, and the method (5) relates to the case of using the in-bath smelting furnace.

The method (4) or (5) described above of producing hot metal may be modified by adoption of the method (2) described hereinbefore, that is, the method of producing reduced iron from fine iron oxides through high temperature reduction of the raw material mixture after increasing apparent density thereof by pressing the bed formed thereof inside the reduction furnace, charging the reduced iron into the shaft furnace or the in-bath smelting furnace.

The aforesaid methods are same as the method (1) of the invention with respect to the steps from mixing raw materials to reduction, that is, from the step a) to step c) in the methods (4) and (5) of the invention as described in DISCLOSURE OF THE INVENTION, and various embodiments described hereinbefore as adopted by the method (1) may be used individually or in combination.

Accordingly the steps from d) to f) in the methods (4) and (5) of the invention are described hereinafter.

The step d) relates to the process of discharging reduced iron obtained by the reduction step (referred to as pre-reduction step in the methods (4) and (5) of producing hot metal according to the invention), and kept at a temperature not less than 500°C from the pre-reduction furnace.

The reason for setting the discharge temperature at not less than 500°C is that at a temperature at this level or higher, melting rate of reduced iron is increased through effective utilization of heat of reduced iron for a succeeding step of melting, and energy efficiency for the whole process is improved while production facilities can be down-sized through economization thereof. However, when a temperature inside the bed is at not less than 1170°C upon discharge, there is a possibility of liquid melt being present inside the bed, posing a risk of trouble in discharge operation. Hence, it is desirable to stop heating so that the temperature inside the bed declines below 1170°C before discharging reduced iron from the furnace. Various methods such as a method of blowing a reducing gas at an ambient temperature, an inert gas, for example, nitrogen gas, and the like onto the surface of the bed, a method of bringing a water-cooled plate in contact with the surface of the bed, or the equivalent may be used for lowering the temperature inside the bed below 1170°C in short time.

The next step e) relates to a process of reduction and melting. In the method (4) described hereinbefore of producing hot metal according to the invention, the shaft furnace is used.

Fig. 12 is a schematic Illustration showing the steps of the method (4) of producing hot metal and the facility used for carrying out the method, according to an embodiment of the invention. As shown in the figure, reduced iron 50 in hot condition is continuously discharged from the discharge outlet 18 of the rotary hearth furnace 11, and sent out to the shaft furnace 62 for the step of reduction and melting.

In the case that the shaft furnace is located at a distance, the reduced iron is transported in a closed container (not shown) with inert gas such is nitrogen gas sealed therein. Normally, however, the shaft furnace is installed adjacent to the rotary hearth furnace, which is a pre-reduction furnace, and the reduced iron is fed into the shaft furnace by a bucket conveyer or the like through an enclosed passage filled with inert gas such as nitrogen or reducing gas such as off-gas from the shaft furnace. Since the reduced iron is sintered in bed-like form upon completion of pre-reduction, same may be transported by a conveyer after light and coarse crushing.

In the step of reduction and melting, the reduced iron 50 in hot condition, lumpy carbon material (cokes, coal, and the like) 63, and flux 64, for adjusting basicity of slag are charged into the shaft furnace 62 from the top thereof, wherein a carbon material filled layer is laid, and a reducing gas at a high temperature is generated through combustion of the carbon material placed in front of tuyeres 65, through which oxygen-containing gas (for example, air) 66 or oxygen 67 is blown in. After reduction and melting, hot metal and slag 68 are discharged from the tap hole provided in the lower part of the furnace.

A furnace used for smelting in the method (4) according to the invention is the shaft furnace as described above wherein a combustion zone in front of the tuyeres is surrounded by the carbon material as in the case of the blast furnace, preventing breakage of refractory bricks due to exposure to high temperatures. Further, as opposed to the case of the method disclosed in Japanese Patent Publication No. H 3-60883 wherein molten iron bath in the smelting furnace is agitated, the shaft furnace used in the method is effective in lengthening the life of the refractory bricks because there is no agitation in molten iron bath inside the shaft furnace.

Further, as reducing atmosphere in the shaft furnace wherein the carbon material filled layer is formed is as intense as that in the case of the blast furnace, sulfur content in hot metal can be held down low, producing high quality hot metal while concentration of FeO in slag can be kept as low as in the case of the blast furnace, contributing to restraining depletion of the refractory bricks.

In terms of thermal efficiency too, high thermal efficiency is ensured by the method because counter-current heat transfer takes place between gas and solids (charged raw materials) in the shaft furnace, from the top of which the carbon material and reduced iron are charged as in the case of the blast furnace. In the case of using cokes for the carbon material, as shown in the figures, consumption of cokes can be reduced by blowing in carbon-bearing material 69 through the tuyeres 65, and blowing in air 66 through the sidewall above the tuyeres 65 so that heat generated by combustion of CO gas and H₂ gas in the furnace can be used for melting of reduced iron.

Dust generated from the shaft furnace may be used within the facility. In the embodiment shown in Fig. 12, emission dust 24 and the equivalent are blown in through the tuyeres 65 of the shaft furnace 62 while same is used in the rotary hearth furnace 11 as a part of raw material. Such recycling contributes to improvement in utilization efficiency of raw material and fuel while waste disposal becomes unnecessary without emission of dust, and the like outside the facility, making the method advantageous from the standpoint of cost and environmental protection.

In the method (5) described hereinbefore of producing hot metal according to the invention, the in-bath smelting furnace is used in the step of reduction and melting.

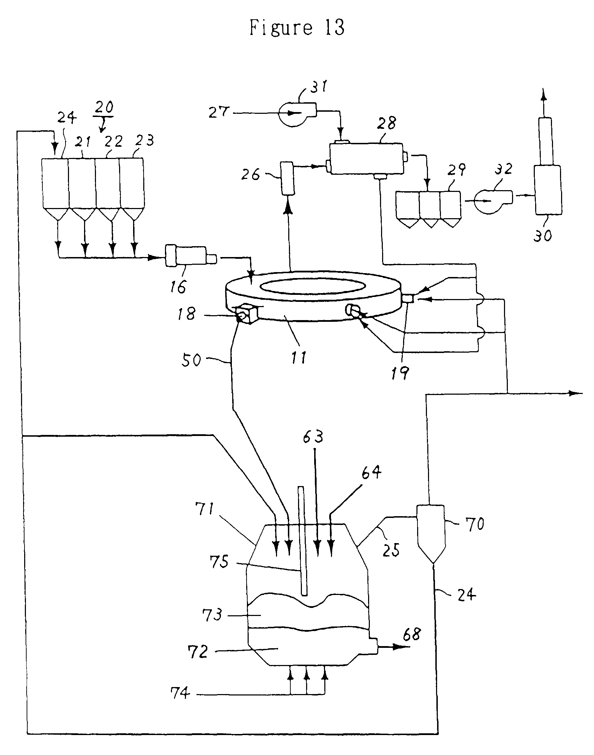

Fig. 13 is a schematic illustration showing the steps of the method (5) of producing hot metal according to an embodiment of the invention and the facility used for carrying out the method. As shown in the figure, the reduced iron 50 in hot condition is continuously discharged from the discharge outlet 18 of the rotary hearth furnace 11, and sent out to the next step of reduction and melting to be carried out in the in-bath smelting furnace 71.

In the case that the in-bath smelting furnace is located at a distance, the reduced iron is transported in a closed container as in the case of the shaft furnace. Normally, however, the in-bath smelting furnace is installed at a location adjacent to the rotary hearth furnace, which is a pre-reduction furnace, and the reduced iron is fed into the in-bath smelting furnace by a bucket conveyer or the like through an enclosed passage filled with inert gas such as nitrogen or reducing gas such as off-gas from the in-bath smelting furnace. Since the reduced iron is sintered in bed-like form upon completion of pre-production, same may be transported by a conveyer after light and coarse crushing.

In the step of reduction and melting, the reduced iron 50 in hot condition, carbon material 63, and flux 64 for adjusting the basicity of slag are charged into the in-bath smelting furnace 71 from the top thereof, wherein molten iron bath 72 and molten slag bath 73 are present and gas 74 for agitation is blown into the molten iron bath 72 from the bottom thereof for agitation of the molten iron bath 72 and molten slag bath 73 while oxygen is supplied into the furnace from the top side via, for example, a water cooled lance 75. After reduction and melting, hot metal and slag 68 are discharged from the tap hole provided in the lower part of the furnace.

In the in-bath smelting furnace, the reduced iron, ash content in the carbon material, and flux are melted by heat generated by combusting the carbon material charged into the furnace from the top thereof, and further combusting CO gas generated through reduction of unreduced iron oxides contained in the reduced iron and a portion of combustible gases issued from the carbon material while the unreduced iron oxides contained in, the reduced iron is reduced by the carbon material. The combustible gases issued from the carbon material are CO gas, H₂ gas, and the like. In this instance heat required for reduction of iron oxides, and also, carbon required for curburizing into the molten iron bath are supplied.

Generally, coal is used for the carbon material, and burnt lime or dolomite, or the like are used for the flux.

The in-bath smelting furnace is quite advantageous in that as cokes are not used therein as opposed to the case of the blast furnace to be filled up with raw material and fuel in layers, hard coking coal is not required with the result that it can do without coke ovens requiring huge capital outlay, and to be operated under constraints from environmental considerations.

Emission dust, and the like generated from the in-bath smelting furnace may be used within the facility. In the embodiment shown in Fig. 13, the emission dust 24 is charged into the in-bath smelting furnace 71 from the top side while being used for a part of raw material charged into the rotary hearth furnace. Such recycling contributes to improvement in utilization efficiency of raw material and fuel while waste disposal becomes unnecessary without emission of dust, and the like outside the facility, making the method advantageous from the standpoint of cost and environmental protection.

The step f) relates to a process of gas recovery whereby gases generated in the shaft furnace or the in-bath smelting furnace are recovered while a portion of the gases is supplied to the pre-reduction furnace as fuel for pre-reduction. More specifically, as shown in Figs. 12 and 13, generated gases (off-gas 25) are recovered after removal of dust, and the like through a dust collector 70 such as cyclone or the like. The recovered gases are sent to downstream process steps or used for power generation while a portion thereof is returned to the rotary hearth furnace 11 (pre-reduction furnace).

Thus, in the method (4) or (5) of producing hot metal according to the invention, reduced iron is produced through rapid reduction of ferrous raw material in fine form charged in the pre-reduction furnace, and furthermore, high quality hot metal is produced by charging the reduced iron in hot condition into the shaft furnace or the in-bath smelting furnace, and melting same at high thermal efficiency.

### (Example 1)

Powder ferrous raw material, coal (fine powder coal) as powder solid reductant and bentonite (binder) each of a composition shown in Table 1 - Table 3 were prepared. Table 4 shows the grain size constitution of the powder ferrous raw material and the coal.

**Table 1**

| | Chemical composition (mass%) | | | | | | | |
|---|---|---|---|---|---|---|---|---|
| | T.Fe | Fe₂O₃ | Fe₃O₄ | FeO | Zn | C | Slag ingredient | L.O.I. |
| Iron ore A | 67.5 | 96.3 | 0.0 | 0.2 | 0.006 | 0.0 | 3.5 | 0.4 |
| Iron ore B | 66.0 | 0.0 | 82.4 | 8.2 | 0.003 | 0.0 | 9.4 | 0.0 |
| Iron work dust | 31.3 | 38.7 | 0.0 | 5.4 | 1.9 | 30.2 | 23.8 | 0.0 |
| Mill scale | 73.8 | 0.0 | 1.9 | 93.2 | 0.005 | 0.0 | 4.9 | 0.0 |
| (Note) L.O.I. means loss on ignition | | | | | | | | |

**Table 2**

| | Chemical composition (mass%) | | | |
|---|---|---|---|---|
| | Fixed carbon | Volatile ingredient | Ash | Total carbon |
| Coal | 64.8 | 25.8 | 9.4 | 78.5 |

**Table 3**

| | Composition (mass%) | | |
|---|---|---|---|
| | Gangue mineral | Fe₂O₃ | L.O.I. |
| Bentonite | 78.5 | 15.4 | 6.1 |
| (Note) L.O.I. means loss on ignition | | | |

**Table 4**

| | Grain size constitution after grain size control |
|---|---|
| Iron ore A | -325 mesh : 90mass% |
| Iron ore B | -325 mesh : 90mass% |
| Iron work dust | -0.5mm : 90mass% , -0.05mm : 30mass% |
| Mill scale | -3mm : 90mass% , -1mm : 50mass% |
| Coal | -200 mesh : 75mass% , -325 mesh : 60mass% |

After mixing them in blending ratios shown in Table 5, the mixed law materials were formed.

Further, for the comparison, a portion of the mixed ray, materials was pelletized into green pellets of 18 mm diameter by a pan type pelletizer, and then heated to 115°C, into dry pellets with 90% or moire of water content being removed.

**Table 5**

| | Raw material blending ratio (mass%) | | | | | | |
|---|---|---|---|---|---|---|---|
| | Iron ore A | Iron ore B | Iron work dust | Mill scale | Coal | Bentonite | Water added |
| Mixed raw material P | 79.7 | - | - | - | 20.3 | 0.0 | 0.0 |
| Mixed raw material Q | 71.7 | - | - | - | 18.3 | 0.0 | 10.0 |
| Mixed raw material R | 70.5 | - | - | - | 18.0 | 1.5 | 10.0 |
| Mixed raw material S | - | 79.5 | - | - | 20.5 | 0.0 | 0.0 |
| Mixed raw material T | 67.2 | - | 14.8 | - | 18.0 | 0.0 | 0.0 |
| Mixed raw material U | - | - | 30.7 | 53.0 | 16.3 | 0.0 | 0.0 |

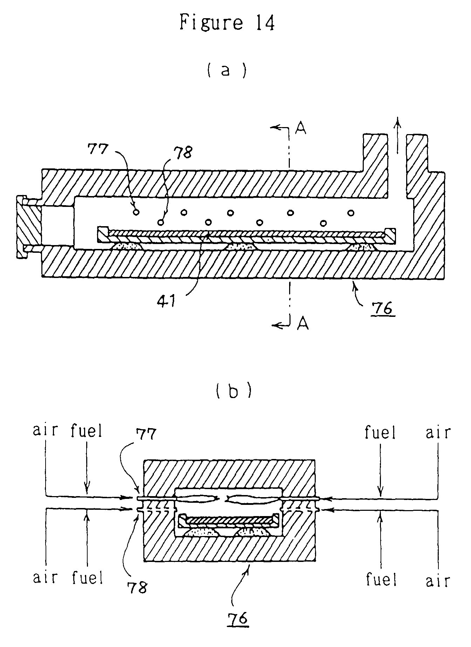

The mixed raw material and pellets were put to reducing test under the conditions shown in Table 6 by using a small-sized high temperature heating-reduction test furnace shown in Fig. 14 ((a) is a schematic vertical cross sectional view and (b) is a cross sectional view taken along arrow A-A in (a)).

In the column for "form of the raw material mixture in the reduction" shown in Table 6, "bed-like" means those in the method of the present invention and "pellets" means those in the existent method respectively. "Pressing for bed" means of forming the raw material mixture to a bed of about 35 mm by a leveler before charging the raw material mixture into the furnace and then pressing to a height of 20 mm by a pressing roller. Further, "mean temperature in the furnace" means a mean gas temperature in the furnace space after stopping blowing of the oxygen-containing gas to the surface of the bed (surface of pellet deposits in a case of using pellets). "Oxygen-containing gas" to be blown into the furnace, "air" was used.

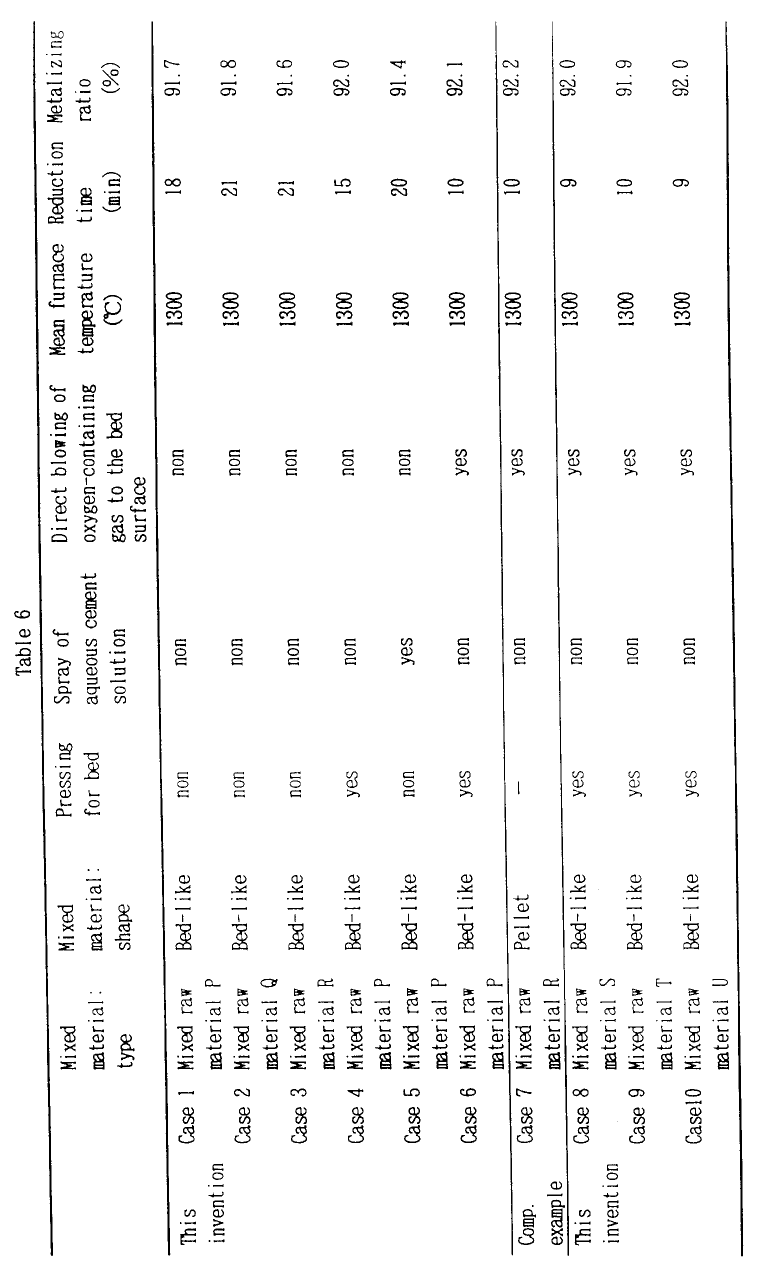

As shown in Fig. 14, burners are disposed in two upper and lower stakes in a high temperature heating reduction test furnace 76, and burners 78 of the lower stage are used for blowing air as an oxygen-containing gas to the surface of beds 41 or pellets only for a period while burnable volatile ingredients are released from the powder solid reductant, thereby burning the burnable volatile ingredients. Use of the lower stage burners 78 was interrupted at the instance the release of the burnable volatile ingredients ended. On the other hand, upper stage burners 77 are heating burners for keeping the furnace temperature to a predetermined temperature.

The burners are disposed in two upper and lower stages since the test furnace is a fixed type. In a case of a rotary hearth furnace, the burners may not be arranged in the two stages but may be in one stage. Namely, in the rotary hearth furnace, it may suffice to set the angle of burners disposed in the generation section of burnable volatile ingredients situated downstream of a charging portion for the raw material such that the oxygen-containing gas hits on the surface of the compact beds. Further, it is advantageous to blow the oxygen-containing gas into the furnace after preheating the gas to about 500 to 600°C by heat exchange with the exhaust gas.

In the reduction test, the aimed value for the metallizing ratio was set to 92% and a reduction time capable of attaining the aimed value was measured. The results are also shown in Table 6.

The test was at first conducted under the conditions of case 1. As a result, it could be confirmed that 92% of metallizing ratio could be attained without pelletization if about 18 min was taken for the reduction time. This shows that the reduction time may be extremely shorter compared with about 8 to 10 hours of reduction time in a case of a shaft furnace type direct reduction system using a reduction gas obtained by modifying usual natural gas.

Case 2 is an example of adding water to the powder raw material in which it was confirmed that homogeneous kneading was facilitated extremely by the addition of water. However, as shown in the result in Table 6, the reduction time was made longer by the addition of water by about 3 min compared with the case 1. From the result, it is considered that the addition amount of water should he decreased as low as possible but, in view of easiness of the kneading, etc., water may be added so long as it is within such a range as capable of ensuring an appropriate reduction time even with addition of water.

Case 3 is an example of adding a binder to the powder raw material in which substantially the same effect as that in the case 2 was obtained and it could be confirmed that homogenous kneading was facilitated by the addition of the binder.

The ratio of the amount of the dust contained in the exhaust gas relative to the amount of the raw material charged in the furnace (dust loss ratio) was 0.5% in the case 1, whereas it was reduced to 0.3% in the case 3 and it could be confirmed that this is effective also for suppressing the scattering of the raw material.

Case 4 is an example of pressing the bed of the mixed raw material to increase the apparent density in which the reduction time was shortened as 15 min, and it was confirmed that the pressing effect was large. It is considered that the reduction time was shortened by the pressing of the bed because particles in the raw material adhered to each other by the pressing to promote heat conduction in the bed and increase the temperature elevation rate in the bed and, as a result, reduction was enhanced.

Further, since the dust loss ratio was 0.2%, which was reduced compared with 0.5% in the case 1, it was confirmed that this is effective also for suppressing the scattering of the raw material.

Case 5 is an example of conducting high temperature reduction after spraying an aqueous solution of cement to the surface of a bed of the mixed raw material. In the case, the reduction time was made longer due to the delay of the temperature elevation in the bed by the effect of the water content but the dust loss ratio was lowered to 0.1% compared with 0.5% in the case 1, and it was confirmed that this is extremely effective for suppressing the scattering of the raw material.

Case 6 is an example of pressing the bed of the mixed raw material by a pressing roller, supplying air to the surface of the bed for about 2 min in which release of the combustible volatile ingredients in the coal continued and burning the combustible volatile ingredients released from the coal was burnt also on the surface of the bed. As a result, the reduction time was 10 min, which was further shortened as much as by 5 min compared with 15 min in the case 4 and it could be confirmed the effectiveness of the method of heating and elevating temperature while burning the combustible volatile ingredients released from the bed also on the surface thereof.

Case 7 is an example of using conventional dry pellets. The reduction time in this case was 10 min, which was about identical compared with the case 6. As a result, it can be said that the method of the present invention of charging the mixed raw material in the form of the bed being kept powderous as it was into the furnace and reducing the same is a reduction method equivalent as compared with the case of using the material in the form of pellets.

Case 8 is an example of using ore B (iron oxide in the formed of magnetite) shown in Table 1. The reduction time was 9 min, which was somewhat shorter compared with case 6 (using ore A with the iron oxide in the form of hematite). This is assumed that while both reduction of magnetite and hematite into metallic iron are endothermic reduction, the reaction heat per iron atom is smaller in the magnetite by about 4760 kcal/kmol, so that temperature lowering is small in the compact bed and, as a result, the reduction reaction was promoted.

Case 9 is an example of using ferrous raw material comprising ore A blended with iron work dust. Case 10 is an example of using ferrous raw material comprising dust and mill scale blended therewith. The reduction time in each of the cases was about 10 min and 9 min, which was substantially identical with the case 6 of using iron ore.

Further, dezinc ratio in case 9 using Zn-containing dust was about 92% and the dezinc effect according to the method of the present invention could be confirmed.

It is considered that although the mixed raw material U was somewhat coarser, the reduction time was not changed so much in case 10, because iron oxide in the mixed raw material U was FeO and the reduction ratio was about 30% on the basis of Fe₂O₃, so that the reduction amount down to the metallic iron may be smaller, as well as that the amount of endothermic reduction per iron atom from FeO into metallic iron was decreased by about 20590 kcal/kmol compared with the case of Fe₂O₃ and the temperature lowering in the compact beds was small and, as a result, the reduction reaction was promoted.

### (Example 2)

Powder iron ore, coal (fine powder coal) as the powder solid reductant and coke having the composition and the grain size constitution as shown in Table 7 - Table 9 blended in a blending ratio shown in Table 10 were prepared.

**Table 7**

| | Chemical composition (mass%) | | | | | |
|---|---|---|---|---|---|---|
| Kind of powder ferrous raw material | T.Fe | Fe₂O₃ | Fe₃O₄ | FeO | Slag ingredient | L.O.I. |
| Iron ore | 67.5 | 96.3 | 0.0 | 0.2 | 2.0 | 0.4 |
| (Note) L.O.I. means loss on ignition | | | | | | |

**Table 8**

| | Chemical composition (mass%) | | | |
|---|---|---|---|---|
| Kind of powder solid reductant | Fixed carbon | Volatile ingredient | Ash | Total carbon |
| Coal | 64.8 | 25.8 | 9.4 | 78.5 |
| Coke | 88.0 | 0.2 | 11.0 | 88.7 |

**Table 9**

| | Grain size constitution after grain size control |
|---|---|
| Iron ore | -325 mesh : 90mass% |
| Coal | -200 mesh : 75mass% , -325 mesh : 60mass% |
| Coke | 10∼30 mm : 30mass% , 30∼60 mm : 70mass% |

**Table 10**

| Raw material blending ratio (mass%) | | |
|---|---|---|
| Iron ore | Coal | Total |
| 79.7 | 20.3 | 100.0 |

As the test facility, a small-sized molten iron manufacturing test facility described above shown in Fig. 12 was used. That is the facility comprises rotary hearth furnace 11 as a preliminary reduction furnace, a shaft furnace 62 as a smelting furnace, a raw material receiving hopper 20, a mixer 16, a waste heat recovery heat exchanger 28 and the like.

Powder iron oxide 21 (powder ore), reductant 22 (fine powder coal) and a binder 23 received in a raw material receiving hopper 20 were taken out each by a predetermined amount from respective hoppers and charged in the mixer 16, sufficiently mixed with addition of a small amount of water and then the mixture was charged into the rotary hearth furnace 11.

Charging to the hearth was conducted by using the charging device shown in Fig. 4 in which the mixed raw material 40 was charged in the form of the powder as it was into the furnace and shaped into a bed of about 35 mm height by using the leveler 39. When the bed of the mixed raw material was pressed, the material was formed into a bed of about 35 mm by the leveler 39 and then pressed by a pressing roller 42 till 20 mm height.

Air, including combustion air, was used after preheating to 600°C by heat exchange with an exhaust gas from the rotary hearth furnace. After the end of the release of the combustible volatile ingredients, the mean gas temperature in the furnace space was set, to about 1300°C. Further, the aimed value for the metallizing ratio of reduced iron was defined to 92%.

The reduced iron obtained from the rotary hearth furnace 11 was taken out at about 1150°C to the outside of the furnace, slightly pulverized coarsely and then charged from above the shaft furnace 62. Carbon material 63 (coke) was charged together with flux 64 (lime stone) from above the shaft furnace 62. The limestone was used in such an amount as to provide the basidity of slag at 1.25.

Molten iron was discharged together with slags from a tap hole disposed to a lower portion of the furnace.

The exhaust gas 25 from the shaft furnace 62 was removed with dust by a cyclone 70 and a portion thereof was blown from burners 19 as fuel used in the rotary hearth furnace 11, while other portions were recovered as fuel for other facilities.

The test was conducted on 5 cases shown in Table 11.

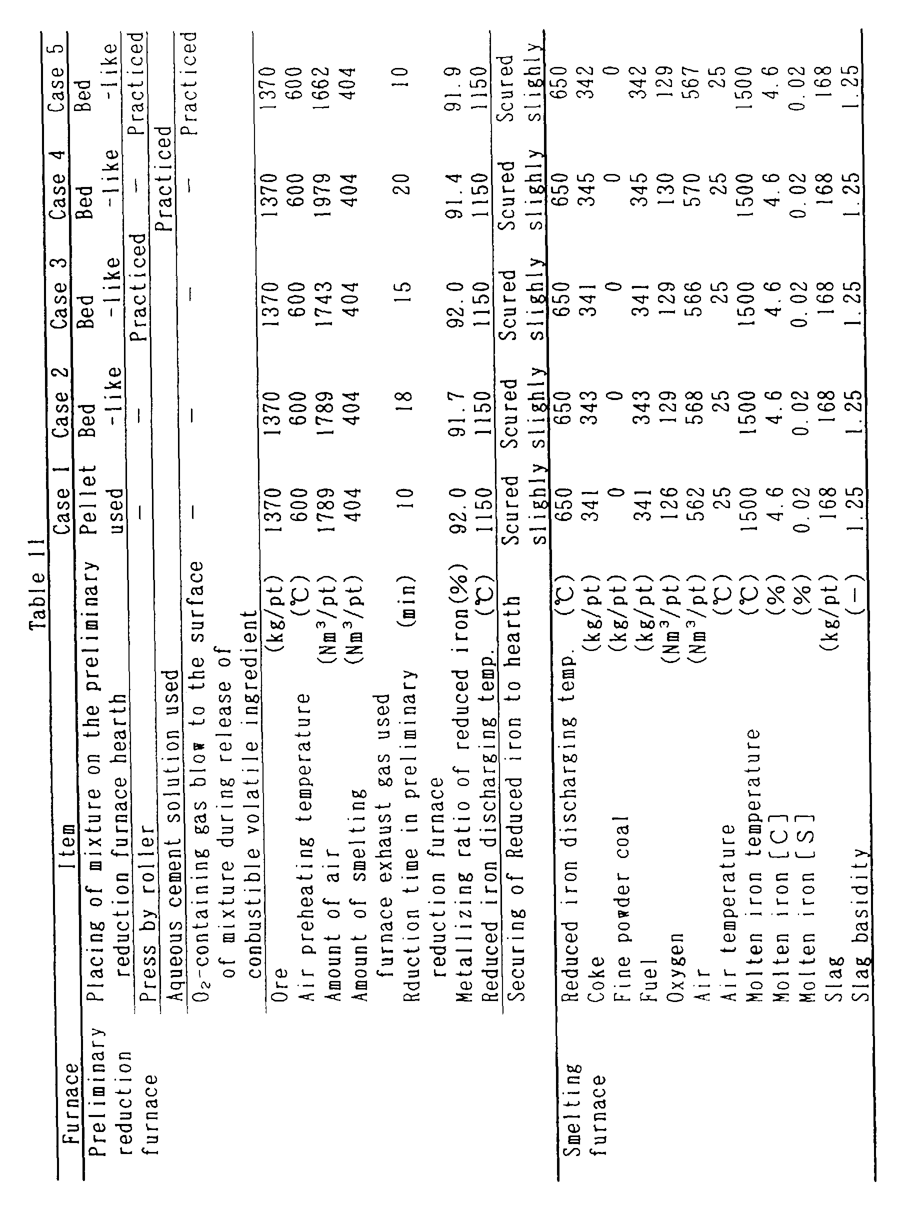

Case 1 indicates a test in a case of pelletting a raw material mixture by an existent method in which the reduction time in the rotary hearth furnace was 10 min.

Case 2 shows an example of charging the raw material mixture in the form of powder as it was in the furnace and formed as a bed and it was confirmed that reduced iron of 92% metallizing ratio was obtained without pelletization, if the reduction time was set to about 18 min. This shows that the reduction time may be extremely shorter compared with about 8 to 10 hours of reduction time in a case of a shaft furnace type direct reduction system using reduction gas obtained by modifying usual natural gas.

Case 3 is an example of pressing the bed of the mixed raw material to increase the apparent density in which the reduction time was shortened as 15 min, and it was confirmed that the pressing effect was large. It is considered that the reduction time was shortened by the pressing of the bed because particles in the raw material adhered to each other by the pressing to promote heat conduction in the bed and increase the temperature elevation rate in the bed. Dust loss ratio was 0.2%, which was reduced compared with 0.5% in the case 2, and it was confirmed that pressing of the bed is effective also for suppressing the scattering of the raw material.

Case 4 is an example of conducting high temperature reduction after spraying an aqueous solution of cement to the surface of a bed of the mixed raw material. While the reduction time was made longer due to the delay of the temperature elevation in the bed by the effect of the water content but the dust loss ratio was lowered to 0.1% compared with 0.5% in the case 2, and it was confirmed that the scattering of the aqueous solution of cement was extremely effective for suppressing the scattering of the raw material.

Case 5 is an example of pressing the bed of the mixed raw material by a pressing roller, supplying air to the surface of the bed for about 2 min in which release of the combustible volatile ingredients in the coal continued and burning the combustible volatile ingredients released from the coal also on the surface of the bed. As a result, the reduction time was further shortened as much as by 5 min compared with the case 3 and it could be confirmed the advantage of the method of heating and elevating temperature while burning the combustible volatile ingredients released from the bed also on the surface thereof.

In the cases 1 - 5 above, oxygen enriched air at a normal temperature was used for the blowing condition, operation was conducted at a theoretical burning temperature before the tuyeres of 2,500°C, and reduced iron at about 650°C was charged into the shaft furnace thereby enabling to produce molten iron of good quality containing 4.6 wt% of carbon and 0.02 wt% of sulfur.

### (Example 3)

Powder iron ore, coal (fine powder coal) as the powder solid reductant having the composition and the grain size constitution as shown in Table 7 - Table 9 used in Example 2, and bentonite shown in Table 3 used in Example 1 blended in a blending ratio shown in Table 12 were prepared.

**Table 12**

| Raw material blending ratio (mass%) | | | |
|---|---|---|---|
| Iron ore | Coal | Bentnaite | Total |
| 75.7 | 19.3 | 5.0 | 100.0 |

As the test facility, a small-sized molten iron manufacturing test facility described above shown in Fig. 13 was used. That is the facility comprises a rotary hearth furnace 11 as a preliminary reduction furnace, a in-bath smelting furnace 71 as a smelting furnace, a raw material receiving hopper 20, a mixer 16, a waste heat recovery heat exchanger 28 and the like.

Powder iron oxide 21 (powder ore), reductant 22 (fine powder coal) and a binder 23 received in a raw material receiving hopper 20 were taken out each by a predetermined amount from respective hoppers and charged in the mixer 16, sufficiently mixed with addition of a small amount of water and then the mixture was charged into the rotary hearth furnace.

Charging to the hearth was conducted by using the charging device shown in Fig. 4 in which the mixed raw material 40 was charged in the form of the powder as it was into the furnace and shaped into a bed of about 35 mm height by using the leveler 39. When the bed of the mixed raw material was pressed, the material was formed into a bed of about 35 mm by the leveler 39 and then pressed by a pressing roller 42 till 20 mm height.

Air, including combustion air, was used after preheating to 600°C by heat exchange with an exhaust gas from the rotary hearth furnace. After the end of the release of the combustible volatile ingredients, the mean gas temperature in the furnace space was set to about 1300°C. Further, the aimed value for the metallizing ratio of reduced iron was defined to 92%.

The reduced iron obtained from the rotary hearth furnace 11 was taken out at about 1150 °C to the outside of the furnace, slightly pulverized coarsely and then charged from above the in-bath smelting furnace 71. Carbon material 63 (coal) was charged together with flux 64 (lime stone) from above the in-bath smelting furnace 71. The limestone was used in such an amount so as to provide the basidity of slag at 1.25.

Molten iron was discharged together with slags from a tap hole disposed to a lower portion of the furnace.

A portion of the exhaust gas 25 from the in-bath smelting furnace 71 was used as fuel used in the rotary hearth furnace 11, while other portions were recovered as fuel for other facilities.

The test was conducted on four cases shown in Table 13.

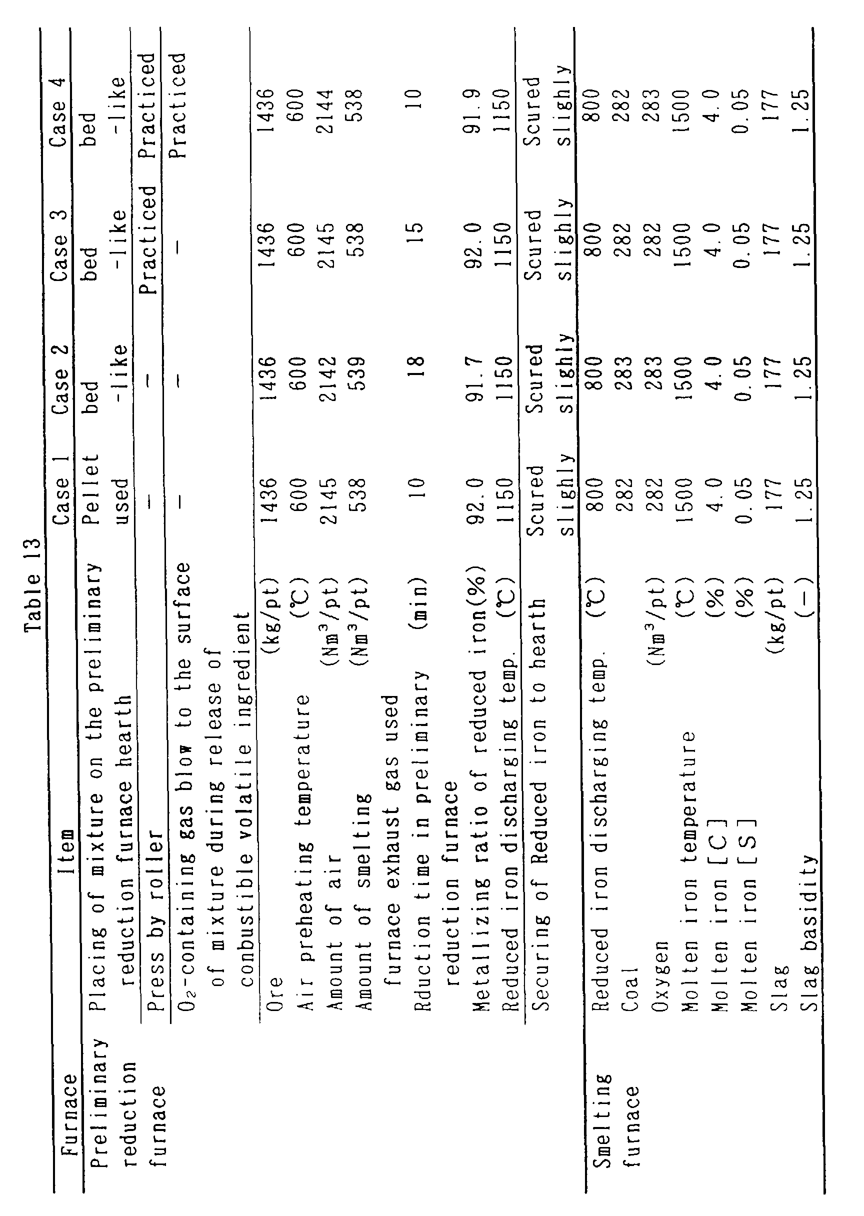

Case 1 indicates a test in case of pelletizing a raw material mixture by an existent method in which the reduction time in the rotary hearth furnace was 10 min.

Case 2 shows an example of charging the raw material mixture in the form of powder as it was in the furnace and formed as a bed and it was confirmed that reduced iron of 92% metallizing ratio was obtained without pelletization, if the reduction time was set to about 18 min. This shows that the reduction time may be extremely shorter compared with about 8 to 10 hours of reduction time in a case of a shaft furnace type direct reduction system using reduction gas obtained by modifying usual natural gas.

Case 3 is an example of pressing the bed of the mixed raw material to increase the apparent density in which the reduction time was shortened as 15 min, and it was confirmed that the pressing effect was large. It is considered that the reduction time was shortened by the pressing of the bed because particles in the raw material adhered to each other by pressing the bed to promote heat conduction in the bed and increase the temperature elevation rate in the bed. Dust loss ratio was 0.2%, which was reduced compared with 0.5% in the case 2, and it was confirmed that pressing of the bed is effective also for suppressing the scattering of the raw material.

Case 4 is an example of pressing the bed of the mixed raw material by a pressing roller, supplying air to the surface of the bed for about 2 min in which release of the combustible volatile ingredients in the coal continued and burning the combustible volatile ingredients released from the coal also on the surface of the bed. As a result, the reduction time was further shortened as much as by 5 min compared with the case 3 and it could be confirmed the advantage of the method of heating and elevating temperature while burning the combustible volatile ingredients released from the bed also on the surface thereof.

In any of the cases 1 - 4 above, reduced iron at about 800°C was charged into the in-bath smelting furnace thereby enabling to produce molten iron of good quality containing 4.0 wt% of carbon and 0.05 wt% of sulfur.

### INDUSTRIAL APPLICABILITY

As has been described above, according to the method of manufacturing the reduced iron of the present invention, since the mixed raw material is charged in the form of the powder as it is in the furnace to form a bed on a hearth or further press the bed and then put to high temperature reduction, it is no more necessary for pelletizing facilities and drying facilities for pelletized products required so far upon pelletizing, and the installation cost and the running cost can be saved to lower the cost for manufacturing the reduced iron. This method can be practiced easily by using the device for manufacturing the reduced iron according to the present invention described above.

Further, the reduced iron obtained by the method described above can be charged at a high temperature state into the shaft furnace or the in-bath smelting furnace and melted at a high heat efficiency, to produce molten iron of good quality.

## Claims

1. A method of producing reduced iron from fine iron oxides,comprising the following step of a) through c):
a) obtaining raw material mixture by mixing fine iron oxides and powdery solid reductants;
b) forming a bed of substantially uniform thickness on the hearth of a reduction furnace by charging the raw material mixture in the form of fines into the reduction furnace; and
c) reducing iron oxides by blowing fuel and oxygen-containing gas into the reduction furnace, and burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C.

2. A method of producing reduced iron from fine iron oxides, comprising the following steps of a) through d):
a) obtaining raw material mixture by mixing fine iron oxides with powdery solid reductants,
b) forming a bed of substantially uniform thickness on the hearth of a reduction furnace by charging said raw material mixture in the form of fines into the reduction furnace,
c) increasing apparent density of the raw material mixture by pressing the bed,
d) reducing iron oxides by blowing fuel and oxygen-containing gas into the reduction furnace, and burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C.

3. A method of producing reduced iron from fine iron oxides according to Claims 1 or 2, wherein the reduction furnace is a rotary hearth furnace provided with a horizontally rotatable hearth.

4. A method of producing reduced iron from fine iron oxides according to any of Claims 1 to 3, wherein water or at least one kind of binder singly or in combination , is added to the fine iron oxides being mixed with the powdery solid reductants.

5. A method of producing reduced iron from fine iron oxides according to any of Claims 1 to 4, wherein a cement-containing liquid is sprayed on the surface of the bed formed of the raw material mixture on the hearth of the pre-reduction furnace.

6. A method of producing reduced iron from fine iron oxides according to any of Claims 1 to 5, wherein iron oxides are reduced by burning combustible volatile constituents issued from the solid reductants contained in the bed formed of the raw material mixture by blowing oxygen-containing gas onto the surface of the bed until issuing of the combustible volatile constituents from the solid reductants substantially ceases, and by maintaining a temperature inside the furnace at not less than 1100°C after issuing of the combustible volatile constituents from the solid reductants has ceased.

7. A method of producing reduced iron from fine iron oxides according to any of Claims 1 to 6, wherein the raw material mixture in the form of fines is charged on top of the powdery solid reductants laid on the hearth of the reduction furnace.

8. A method of producing reduced iron from fine iron oxides according to any of Claims 1 to 7, wherein the reduced iron is discharged by a pushout device reciprocatingly movable in the direction at right angles to the direction of advance of the hearth.

9. A method of producing reduced iron from fine iron oxides according to any of Claims 1 to 7, wherein the reduced iron is discharged towards both sides of the hearth along a discharge guide fence provided on the hearth, and formed in the shape resembling the letter V based at the center across the hearth, and spread in the direction of advance of the hearth.

10. A method of producing reduced iron from fine iron oxides according to any of Claims 3 to 9, wherein the reduced iron fines remaining on the hearth are removed from the surface of the hearth by blowing off with injected gas flow between the reduced iron discharge area and the raw material feeding inlet.

11. A method of producing reduced iron from fine iron oxides according to any of Claims 3 to 9, wherein the reduced iron fines remaining on the hearth is removed by sweeping the surface of the hearth between the reduced iron discharge area and the raw material feeding inlet with brooms, each provided with rotatable brush.

12. A method of producing reduced iron from fine iron oxides according to any of Claims 3 to 9, wherein the reduced iron fines and adhesive matter are removed by scraping same off with a scraper reciprocatingly movable in the direction crossing the direction of advance of the hearth between the reduced iron discharge area and the raw material feeding inlet, the lower edge thereof being kept in touch with the hearth.

13. A method of producing reduced iron from fine iron oxides according to any of Claims 3 to 9, wherein the reduced iron fines remaining on the hearth is removed from the surface of the hearth by sticking same in through a suction hood provided between the reduced iron discharge area and the raw material feeding inlet.

14. A method of producing reduced iron from fine iron oxides according to any of Claims 1 to 9, wherein the reduced iron fines are prevented from remaining on the hearth by a scraper type gate with the lower end thereof kept in contact with the hearth and installed immediately behind the fixed stopper fence installed in the reduced iron discharge area.

15. A facility for producing reduced iron for carrying out the method according to Claim 1, comprising:
a mixer for mixing fine iron oxides with powdery solid reductants;
a charging apparatus for forming a bed of substantially uniform thickness on the hearth of a reduction furnace by charging the raw material mixture in the form of fines into the reduction furnace; and
a reduction furnace for reducing the iron oxides contained in the raw material mixture charged therein, said reduction furnace being a rotary hearth furnace comprising:
a furnace body provided with a feeding inlet for said raw material mixture, a discharge outlet for the reduced iron produced through high temperature reduction of the iron oxides, and an exhaust outlet for off-gas generated therein,
a hearth installed therein so as to be horizontally rotatable, and
burners for combusting the fuel after the fuel and the oxygen-containing gas are blown in.

16. A facility for producing reduced iron for carrying out the method according to Claim 2, comprising:
a mixer for mixing fine iron oxides with powdery solid reductants;
a charging apparatus for forming a bed of substantially uniform thickness on the health of a reduction furnace by charging the raw material mixture in the form of fines into the reduction furnace;
apparatus for increasing apparent density of the raw material mixture by applying pressure on the bed formed of the raw material mixture charged into the reduction furnace; and
a reduction furnace for reducing the iron oxides contained in the raw material mixture charged therein, said reduction furnace being a rotary hearth furnace comprising:
a furnace body provided with a feeding inlet for said raw material mixture, a discharge outlet for the reduced iron produced through high temperature reduction of the iron oxides, and an exhaust outlet for off-gas generated therein,
a hearth installed therein so as to be horizontally rotatable, and
burners for combusting the fuel after the fuel and the oxygen-containing gas are blown in.

17. A method of producing hot metal from fine iron oxides, comprising the following step of a) through f):
a) obtaining raw material mixture by mixing fine iron oxides with powdery solid reductants;
b) forming a bed of substantially uniform thickness on the hearth of a pre-reduction furnace by charging said raw material mixture in the form of fines into the pre-reduction furnace;
c) pre-reducing iron oxides by blowing fuel and oxygen-containing gas into the pre-reduction furnace, burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C;
d) discharging the reduced iron obtained through the pre-reduction step from the pre-reduction furnace at a temperature not less than 500°C;
e) reducing and melting the reduced iron in a hot condition discharged through the discharge step described above, by charging the reduced iron together with carbon material and flux into a shaft furnace from the upper part thereof, having a carbon material bed therein, and tuyeres in the lower part thereof for oxygen containing gas blown in therethrough to combust the carbon material disposed in front thereof, generating reducing gas at a high temperature, so that hot metal and molten slag are discharged thorough a tap hole provided in the lower part of the shaft furnace; and
f) recovering off-gases generated in the shaft furnace, and recycling a part of the off-gases into the pre-reduction furnace for use as a fuel for pre-reduction.

18. A method of producing hot metal from fine iron oxides, comprising the following steps of a) through f):
a) obtaining raw material mixture by mixing fine iron oxides and powdery solid reductants;
b) forming a bed of substantially uniform thickness on the hearth of a pre-reduction furnace by charging said raw material mixture in the form of fines into the pre-reduction furnace;
c) pre-reducing iron oxides by blowing fuel and oxygen-containing gas into the pre-reduction furnace, burning the fuel, combustible volatile constituents issued from the powdery solid reductants and the CO gas generated as a result of reduction of the iron oxides by the agency of the powdery solid reductants, so that a temperature inside the furnace is maintained at not less than 1100°C;
d) discharging the reduced iron obtained through the pre-reduction step from the pre-reduction furnace at a temperature not less than 500°C;
e) reducing and melting the reduced iron in a hot condition discharged through the discharge step described above, by charging the reduced iron together with carbon material and flux into a in-bath smelting furnace from the upper part thereof, the in-bath smelting furnace having molten metal bath and molten slag bath therein, and through the bottom of which gas for agitation is blown into the molten metal bath for stirring up the molten metal bath and molten slag bath while oxygen is blown thereinto from the upper part thereof, so that hot metal and molten slag are discharged thorough a tap hole provided in the lower part of the in-bath smelting furnace; and
f) recovering off-gases generated in the in-bath smelting furnace, and recycling a part of the off-gases into the pre-reduction furnace for use as fuel for pre-reduction.

19. A method of producing hot metal according to Claim 17 or 18, wherein apparent density of the raw material mixture is increased by pressing the bed of substantially uniform thickness, formed of the raw material mixture.

20. A method of producing hot metal according to any of Claims 17 to 19, wherein water or at least one kind of binder, singly or in combination, is added to the fine iron oxides being mixed with the powdery solid reductants.

21. A method of producing hot metal according to any of Claims 17 to 20, wherein a cement-containing liquid is sprayed on the surface of the bed formed of the raw material mixture, on the hearth of the pre-reduction furnace.

22. A method of producing hot metal according to any of Claims 17 to 21, wherein iron oxides are reduced by burning combustible volatile constituents issued from the solid reductants contained in the bed formed of the raw material mixture near the bed surface by blowing oxygen-containing gas onto the surface of the bed until issuing of the combustible volatile constituents from the solid reductants substantially ceases, and by maintaining a temperature inside the furnace at not less than 1100 °C after issuing of the combustible volatile constituents from the solid reductants has ceased.

23. A method of producing hot metal according to any of Claims 17 to 22, wherein the raw material mixture in the form of fines is charged on top of the powdery solid reductants laid on the hearth of the pre-reduction furnace.
